# EUROPEAN PATENT APPLICATION

(11) **EP 4 671 894 A1**
(43) Date of publication of application: **31.12.2025**
(21) Application number: 25184433.8
(22) Date of filing: 23.06.2025
(51) Int. Cl.: G05D 1/229, G05D 1/622, G05D 105/15, G05D 107/20, G05D 109/10, A01B 69/04

(54) **TRAVEL CONTROL SYSTEM, WORK VEHICLE, AND METHOD OF TRAVEL CONTROL**

(30) Priority: 27.06.2024 JP 2024104470
(71) Applicant: Kubota Corporation, Osaka 556-8601 (JP)
(72) Inventor: NISHIYAMA, Takashi, Sakai-shi, Osaka, 590-0908 (JP); HARADA, Tsuyoshi, Sakai-shi, Osaka, 590-0908 (JP); KINOSHITA, Tomohiro, Sakai-shi, Osaka, 590-0908 (JP); KIKUCHI, Ryota, Sakai-shi, Osaka, 590-0908 (JP)
(74) Representative: Müller-Boré & Partner Patentanwälte PartG mbB

(57) **Abstract**

A controller for a work vehicle is configured or programmed to operate in a recording mode to generate and record waypoint information while the work vehicle is traveling along a path including main paths extending parallel or substantially parallel to crop rows and turning paths, the waypoint information including first information concerning the position of the work vehicle and second information concerning the state of the work vehicle, and to operate in a reproducing mode to control operation of the work vehicle based on the recorded waypoint information, and, when an obstacle is detected while the work vehicle is traveling along one of the turning paths, control travel of the work vehicle to avoid the obstacle and move toward a specific point on a main path to be traveled next. The specific point is determined based on the second information included in the waypoint information.

## Description

### CROSS REFERENCE TO RELATED APPLICATIONS

This application claims the benefit of priority to Japanese Patent Application No. 2024-104470 filed on June 27, 2024. The entire contents of this application are hereby incorporated herein by reference.

### BACKGROUND OF THE INVENTION

### 1. Field of the Invention

The present disclosure relates to travel control systems, work vehicles, and methods of travel control.

### 2. Description of the Related Art

As attempts in next-generation agriculture, research and development of smart agriculture utilizing ICT (Information and Communication Technology) and IoT (Internet of Things) is under way. Research and development is also directed to the automation and unmanned use of tractors or other work vehicles to be used in the field. For example, work vehicles which travel via automatic steering by utilizing a positioning system that is capable of precise positioning, e.g., a GNSS (Global Navigation Satellite System), are coming into practical use.

International Publication No. 2022/107586 describes a work vehicle that is capable of autonomous movement among a plurality of rows of trees in an orchard, such as a vineyard, by using an SLAM (Simultaneous Localization and Mapping) technique that simultaneously performs localization and map generation. International Publication No. 2022/107586 describes, in an orchard, a work vehicle traveling among a plurality of rows of trees, where the work vehicle performs mowing, preventive pest control, or other work by using an implement (agricultural implement) that is linked to the work vehicle.

### SUMMARY OF THE INVENTION

There is also a need for automation and unmanned application of work that is performed while a work vehicle travels in a field (e.g., an orchard). Work that is performed during the travel of a work vehicle in a field may involve the same task being iteratively performed multiple times. For example, tasks such as mowing and preventive pest control may be iteratively performed multiple times for the same field. When the same task is iteratively performed, the work vehicle performs the same task while traveling along the same path in the field in the same way. In such a case, performing every instance of autonomous travel by, e.g., an SLAM technique will lead to an unwanted increase in the processing load for the autonomous travel.

Efficiently performing iterative operations of a work vehicle is required not only in agricultural machines, but also in work vehicles that are for non-agricultural uses, such as construction vehicles or snowplow vehicles. Furthermore, even in the cases of travel that does not involve work of a work vehicle, it is necessary to efficiently perform any travel that is performed iteratively along the same path.

Example embodiments of the present disclosure provide travel control systems, work vehicles, and methods of travel control that enable efficient performance of iterative operations (including travel and other operations) of work vehicles.

The present disclosure provided solutions as recited in the following Items.

### [Item 1]

A travel control system for a work vehicle, comprising:
a positioning device to detect a position of the work vehicle and output position data;
one or more internal sensors to detect a state of the work vehicle and output sensor data;
an obstacle sensor to detect an obstacle around the work vehicle; and
a controller configured or programmed to:
   control operation of the work vehicle;
   operate in a recording mode and a reproducing mode;
   in the recording mode, generate and record to a storage device multiple pieces of waypoint information based on the position data and the sensor data while the work vehicle is traveling, each of the multiple pieces of waypoint information including first information concerning the position of the work vehicle and second information concerning the state of the work vehicle; and
   in the reproducing mode, control the operation of the work vehicle while causing the work vehicle to perform self-traveling based on the first information and the second information included in the multiple pieces of waypoint information recorded in the recording mode; wherein
a path traveled by the work vehicle in the recording mode includes a plurality of main paths that extend parallel or substantially parallel to a plurality of crop rows and a plurality of turning paths that interconnect the plurality of main paths; and
the controller is configured or programmed to:
   in the reproducing mode, when an obstacle is detected by the obstacle sensor while the work vehicle is traveling along one of the plurality of turning paths, control travel of the work vehicle to avoid the obstacle and move toward a specific point on a main path to be traveled next among the plurality of main paths; and
   determine the specific point based on the second information included in the multiple pieces of waypoint information.

### [Item 2]

The travel control system of claim 1, wherein
the work vehicle includes a PTO shaft to transmit motive power to an implement linked to the work vehicle;
the second information includes information indicating ON or OFF of rotation of the PTO shaft; and
the controller is configured or programmed to determine a point at which rotation of the PTO shaft is ON as the specific point, based on the second information.

### [Item 3]

The travel control system of claim 2, wherein the controller is configured or programmed to determine a point at which rotation of the PTO shaft switches from OFF to ON as the specific point, based on the second information.

### [Item 4]

The travel control system of any one of claims 1 to 3, wherein
the work vehicle includes a three-point hitch to adjust a height of an implement linked to the work vehicle;
the second information includes information on a height of the three-point hitch; and
the controller is configured or programmed to determine a point at which the height of the implement is a height during work as the specific point, based on the second information.

### [Item 5]

The travel control system of claim 4, wherein the controller is configured or programmed to determine a point at which the height of the implement switches from a height during non-work to a height during work as the specific point, based on the second information.

### [Item 6]

The travel control system of any one of claims 1 to 5, wherein
the second information includes information indicating a velocity or an acceleration of the work vehicle; and
the controller is configured or programmed to determine a point at which a magnitude of acceleration of the work vehicle exceeds a threshold as the specific point, based on the second information.

### [Item 7]

The travel control system of any one of claims 1 to 6, wherein
the work vehicle has a front wheel speed increasing function of increasinga front wheel in speed during a turn;
the second information includes information indicating ON or OFF of the front wheel speed increasing function; and
the controller is configured or programmed to determine a point at which the front wheel speed increasing function switches from OFF to ON as the specific point, based on the second information.

### [Item 8]

The travel control system of any one of claims 1 to 6, wherein:
the work vehicle has a single brake function of braking on an inner rear wheel during a turn;
the second information includes information indicating ON or OFF of the single brake function; and
the controller is configured or programmed to determine a point at which the single brake function switches from OFF to ON as the specific point, based on the second information.

### [Item 9]

The travel control system of any one of claims 1 to 8, wherein the controller is configured or programmed to, in the reproducing mode, halt the work vehicle when an obstacle is detected by the obstacle sensor while the work vehicle is traveling along one of the plurality of main paths.

### [Item 10]

The travel control system of claim 9, wherein the controller is configured or programmed to, in the reproducing mode, when an obstacle is detected by the obstacle sensor while the work vehicle is traveling along an endmost main path among the plurality of main paths:
stop work of the work vehicle;
control travel of the work vehicle to avoid the obstacle and move toward a point on the main path; and
restart tasked travel from the point on the main path.

### [Item 11]

The travel control system of claim 10, wherein the controller is configured or programmed to, when an unworked section has occurred because of performing an operation of avoiding the obstacle, record information identifying the unworked section to the storage device.

### [Item 12]

The travel control system of any one of claims 1 to 11, wherein:
the plurality of crop rows include rows of trees; and
the controller is configured or programmed to:
   recognize whether an obstacle detected by the obstacle sensor is a tree or not;
   control travel of the work vehicle to avoid the obstacle and move toward the specific point when the obstacle is recognized as a tree; and
   halt the work vehicle when the obstacle is not recognized as a tree.

### [Item 13]

A work vehicle comprising:
the travel control system of any one of claims 1 to 12; and
a travel device.

### [Item 14]

A controller to control operation of a work vehicle, the controller being configured or programmed to operate in a recording mode and a reproducing mode, the controller comprising:
a processor; and
a memory to store a computer program to cause the processor to perform:
   in the recording mode, generating and recording to a storage device multiple pieces of waypoint information based on position data acquired from a positioning device to detect a position of the work vehicle and sensor data acquired from one or more internal sensors to detect a state of the work vehicle while the work vehicle is traveling along a path including a plurality of main paths that extend parallel or substantially parallel to a plurality of crop rows and a plurality of turning paths that interconnect the plurality of main paths, each of the multiple pieces of waypoint information including first information concerning the position of the work vehicle and second information concerning the state of the work vehicle;
   in the reproducing mode, controlling the operation of the work vehicle while causing the work vehicle to perform self-traveling based on the first information and the second information included in the multiple pieces of waypoint information recorded in the recording mode;
   in the reproducing mode, when an obstacle is detected by an obstacle sensor mounted on the work vehicle while the work vehicle is traveling along one of the plurality of turning paths, controlling travel of the work vehicle to avoid the obstacle and move toward a specific point on a main path to be traveled next among the plurality of main paths; and
determining the specific point based on the second information included in the multiple pieces of waypoint information.

### [Item 15]

A method of travel control to be performed by a controller to control operation of a work vehicle, the controller being configured or programmed to operate in a recording mode and a reproducing mode, the method comprising:
in the recording mode, generating and recording to a storage device multiple pieces of waypoint information based on position data acquired from a positioning device to detect a position of the work vehicle and sensor data acquired from one or more internal sensors to detect a state of the work vehicle while the work vehicle is traveling along a path including a plurality of main paths that extend parallel or substantially parallel to a plurality of crop rows and a plurality of turning paths that interconnect the plurality of main paths, each of the multiple pieces of waypoint information including first information concerning the position of the work vehicle and second information concerning the state of the work vehicle;
in the reproducing mode, controlling the operation of the work vehicle while causing the work vehicle to perform self-traveling based on the first information and the second information included in the multiple pieces of waypoint information recorded in the recording mode;
in the reproducing mode, when an obstacle is detected by an obstacle sensor mounted on the work vehicle while the work vehicle is traveling along one of the plurality of turning paths, controlling travel of the work vehicle to avoid the obstacle and move toward a specific point on a main path to be traveled next among the plurality of main paths; and
determining the specific point based on the second information included in the multiple pieces of waypoint information.

### [Item 16]

A computer program product to be executed by a processor in a controller configured to control operation of a work vehicle and to operate in a recording mode and a reproducing mode, the computer program causing the processor to perform:
in the recording mode, generating and recording to a storage device multiple pieces of waypoint information based on position data acquired from a positioning device to detect a position of the work vehicle and sensor data acquired from one or more internal sensors to detect a state of the work vehicle while the work vehicle is traveling along a path including a plurality of main paths that extend parallel or substantially parallel to a plurality of crop rows and a plurality of turning paths that interconnect the plurality of main paths, each of the multiple pieces of waypoint information including first information concerning the position of the work vehicle and second information concerning the state of the work vehicle;
in the reproducing mode, controlling the operation of the work vehicle while causing the work vehicle to perform self-traveling based on the first information and the second information included in the multiple pieces of waypoint information recorded in the recording mode;
in the reproducing mode, when an obstacle is detected by an obstacle sensor mounted on the work vehicle while the work vehicle is traveling along one of the plurality of turning paths, controlling travel of the work vehicle to avoid the obstacle and move toward a specific point on a main path to be traveled next among the plurality of main paths; and
determining the specific point based on the second information included in the multiple pieces of waypoint information.

### [Item 17]

A controller to perform the method of travel control of Item 15.

### [Item 18]

A computer program product to be executed by a computer that controls operation of a work vehicle, wherein
the computer program product causes the computer to perform the method of travel control of Item 15.

### [Item 19]

A storage medium storing a computer program to be executed by a computer that controls operation of a work vehicle, wherein
the computer program causes the computer to perform the method of travel control of Item 15.

### [Item 20]

A controller to control operation of a work vehicle, the controller being capable of operating in a recording mode and a reproducing mode, comprising:
means for, in the recording mode, generating and recording to a storage device multiple pieces of waypoint information based on position data acquired from a positioning device to detect a position of the work vehicle and sensor data acquired from one or more internal sensors to detect a state of the work vehicle while the work vehicle is traveling along a path including a plurality of main paths that extend substantially in parallel to a plurality of crop rows and a plurality of turning paths that interconnect the plurality of main paths, each piece of waypoint information including first information concerning the position of the work vehicle and second information concerning the state of the work vehicle;
means for, in the reproducing mode, controling the operation of the work vehicle while causing the work vehicle to perform self-traveling based on the first information and the second information included in the multiple pieces of waypoint information recorded in the recording mode;
means for, in the reproducing mode, when an obstacle is detected by an obstacle sensor mounted on the work vehicle while the work vehicle is traveling along one of the plurality of turning paths, controling travel of the work vehicle to avoid the obstacle and move toward a specific point on a main path to be traveled next among the plurality of main paths, and
means for determining the specific point based on the second information included in the multiple pieces of waypoint information.

### [Item 21]

A travel control system comprising:
the controller of Item 14 or 20; and
a first drive device to drive the running gear, wherein,
in the reproducing mode, the controller is configured to cause the work vehicle to perform self-traveling by controlling the first drive device based on the first information and the second information included in the multiple pieces of waypoint information recorded in the recording mode.

### [Item 22]

The travel control system of Item 21, further comprising
a second drive device to drive an implement linked to the work vehicle, wherein,
the second information includes information concerning operation of the implement; and,
the controller is configured to, in the reproducing mode, control the operation of the implement by controlling the second drive device based on the second information included in the multiple pieces of waypoint information recorded in the recording mode.

Example embodiments of the present disclosure may be implemented using a device, a system, a method, an integrated circuit, a computer program, a computer-readable storage medium, or any combination thereof. The computer-readable storage medium may be inclusive of a volatile storage medium, or a non-volatile storage medium. The device may include a plurality of devices. In the case where the device includes two or more devices, the two or more devices may be provided within a single apparatus, or divided over two or more separate apparatuses.

According to example embodiments of the present disclosure, travel control systems, work vehicles, and methods of travel control that enable efficient performance of iterative operations (including travel and other operations) of a work vehicle are provided.

The above and other elements, features, steps, characteristics and advantages of the present invention will become more apparent from the following detailed description of the example embodiments with reference to the attached drawings.

### BRIEF DESCRIPTION OF THE DRAWINGS

FIG. **1** is a side view schematically showing an example of a work vehicle according to an example embodiment of the present disclosure.
FIG. 2 is a block diagram schematically showing an example configuration for a work vehicle and an implement according to an example embodiment of the present disclosure.
FIG. **3A** is a block diagram showing a schematic example configuration for a travel control system according to an example embodiment of the present disclosure.
FIG. **3B** is a block diagram showing an example configuration for a controller included in a travel control system according to an example embodiment of the present disclosure.
FIG. **4** is a schematic diagram showing an example configuration for a travel control system according to an example embodiment of the present disclosure.
FIG. **5** is a diagram schematically showing an example environment to be traveled by a work vehicle according to an example embodiment of the present disclosure.
FIG. **6A** is a diagram schematically showing an example of a path to be traveled by a work vehicle according to an example embodiment of the present disclosure in a recording mode.
FIG. **6B** is a diagram schematically showing a path to be traveled by a work vehicle according to an example embodiment of the present disclosure in a reproducing mode.
FIG. **7** is a diagram schematically showing another example of a path to be traveled by a work vehicle according to an example embodiment of the present disclosure.
FIG. **8** is a diagram schematically showing another example of a path to be traveled by a work vehicle according to an example embodiment of the present disclosure.
FIG. **9A** is a flowchart showing an example processing to be performed by the controller in the recording mode.
FIG. **9B** is a flowchart showing another example processing to be performed by the controller in the recording mode.
FIG. **9C** is a flowchart showing still another example processing to be performed by the controller in the recording mode.
FIG. **10** is a diagram showing an example of waypoint information.
FIG. **11** is a flowchart showing an example processing to be performed by the controller in the reproducing mode.
FIG. **12A** is a diagram schematically showing an example processing to be performed by a controller of a travel control system according to an example embodiment of the present disclosure.
FIG. **12B** is a diagram schematically showing an example processing to be performed by a controller of a travel control system according to an example embodiment of the present disclosure.
FIG. **12C** is a diagram schematically showing an example processing to be performed by a controller of a travel control system according to an example embodiment of the present disclosure.
FIG. **13** is a diagram showing an example of operation switches and an operation terminal provided in a cabin that is included in a work vehicle.
FIG. **14** is a diagram for describing an example of an obstacle avoidance operation in the reproducing mode.
FIG. **15** is a diagram for describing another example of an obstacle avoidance operation in the reproducing mode.
FIG. **16** is a flowchart showing an example of the obstacle avoidance operation in the reproducing mode.

### DETAILED DESCRIPTION OF THE EXAMPLE EMBODIMENTS

In the present disclosure, a "work vehicle" means a vehicle for use in performing work in a work area. A "work area" is any place where work may be performed, e.g., a field, a mountain forest, or a construction site. A "field" is any place where agricultural work may be performed, e.g., an orchard, an agricultural field, a paddy field, a cereal farm, or a pasture. A work vehicle can be an agricultural machine such as a tractor, a rice transplanter, a combine, a vehicle for crop management, or a riding mower, or a vehicle for non-agricultural purposes such as a construction vehicle or a snowplow vehicle. A work vehicle may be configured so that an implement (also referred to as a "task apparatus") that is suitable for the content of work can be attached to at least one of its front and its rear. In particular, an implement that is attached to an agricultural tractor may be referred to as an "agricultural implement". Traveling of a work vehicle that occurs while it performs work by using an implement may be referred to as "tasked travel". The "operation" of a work vehicle includes not only travel of the work vehicle but also other operations.

"Self-driving" means controlling the travel of a vehicle based on the action of a controller, rather than through manual operation of a driver. During self-driving, not only the travel of the vehicle, but also the task operation (e.g., the operation of the implement) may also be automatically controlled. A vehicle that is traveling via self-driving is said to be "self-traveling". The controller may be configured or programmed to control at least one of steering, adjustment of traveling speed, and starting and stopping of travel as are necessary for the travel of vehicle. In the case of controlling a work vehicle having an implement attached thereto, the controller may be configured or programmed to control operations such as raising or lowering of the implement, starting and stopping of the operation of the implement, and the like. Travel via self-driving includes not only the travel of a vehicle toward a destination along a predetermined path, but also the travel of merely following a target of tracking. A vehicle performing self-driving may operate not only in a self-driving mode but also in a manual driving mode of traveling through manual operation of the driver. Traveling through manual operation of the driver is referred to as "manual traveling". "Manual operation of a driver" includes not only manual operation by a driver on the vehicle, but also remote operation by a driver (operator) outside the vehicle. A vehicle performing self-driving may travel partly based on manual operation of the driver. The steering of a vehicle that is based on the action of a controller, rather than manual operation of the driver, is referred to as "automatic steering". A portion or a whole of the controller may be external to the vehicle. Between the vehicle and a controller that is external to the vehicle, communication of control signals, commands, data, or the like may be performed. A vehicle performing self-driving may autonomously travel while sensing the surrounding environment, without any person being involved in the control of the travel of the vehicle. A vehicle that is capable of autonomous travel can travel in an unmanned manner. During autonomous travel, detection of obstacles and avoidance of obstacles may be performed.

A "crop row" is a row of agricultural items, trees, or other plants that may grow in rows on a field, e.g., an orchard or an agricultural field, or in a forest or the like. In the present disclosure, a "crop row" is a notion that encompasses a "row of trees".

Hereinafter, example embodiments of the present disclosure will be described more specifically. Note however that unnecessarily detailed descriptions may be omitted. For example, detailed descriptions on what is well known in the art or redundant descriptions on what is substantially the same configuration may be omitted. This is to avoid lengthy description, and facilitate the understanding of those skilled in the art. The accompanying drawings and the following description, which are provided by the present inventors so that those skilled in the art can sufficiently understand the present disclosure, are not intended to limit the scope of claims. In the following description, component elements having identical or similar functions are denoted by identical reference numerals.

The following example embodiments are only examples, and the techniques according to example embodiments of the present disclosure is not limited to the following example embodiments. For example, numerical values, shapes, materials, steps, orders of steps, etc., that are indicated in the following example embodiments are only examples, and admit of various modifications so long as it makes technological sense. Any one example embodiment may be combined with another.

Hereinafter, as one example, an example embodiment where the work vehicle is a tractor for use in agricultural work in a field such as an orchard will be described. Without being limited to tractors, the techniques according to example embodiments of the present disclosure is also applicable to other type of agricultural machines such as a rice transplanter, a combine, a vehicle for crop management, or a riding lawn mower, for example. The techniques according to example embodiments of the present disclosure is also applicable to vehicles for non-agricultural purposes such as a construction vehicle or a snowplow vehicle. Furthermore, the techniques according to example embodiments of the present disclosure are applicable to travel of a work vehicle other than in work areas, and also to travel of a work vehicle that does not involve any work.

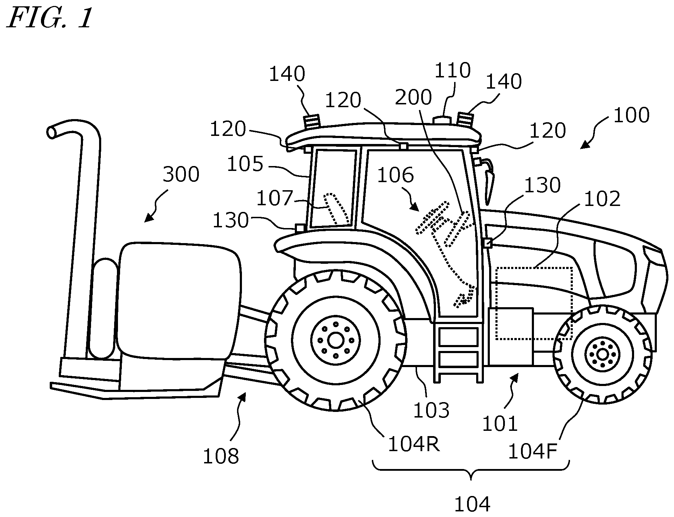

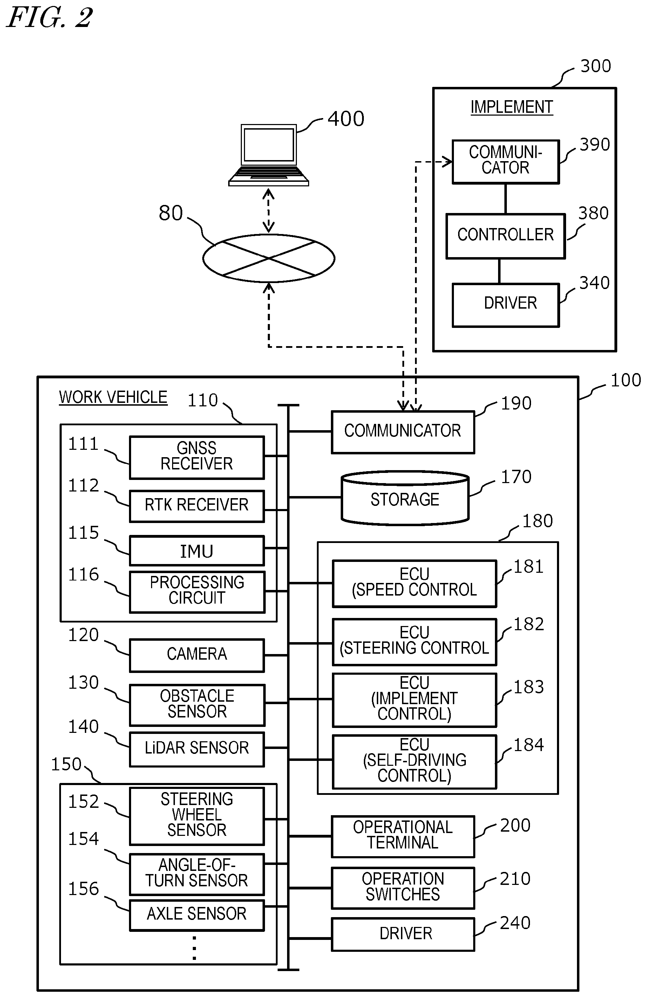

FIG. **1** is a side view schematically showing an example of a work vehicle **100** and an implement **300** that is linked to the work vehicle **100.** FIG. **2** is a block diagram schematically showing an example configuration for the work vehicle **100** and the implement **300.**

As shown in FIG. **1** and FIG. **2****,** the work vehicle **100** includes: a positioning device **110** to detect the position of the work vehicle **100** and output position data (e.g., a GNSS unit); a sensor group **150** to detect the state of the work vehicle **100** and output sensor data; and a controller **180** configured or programmed to control the operation of the work vehicle **100.** The sensor group **150** includes one or more sensors.

The work vehicle **100** may further include a plurality of external sensors to sense the surroundings of the work vehicle **100.** An "external sensor" is a sensor that senses the external state of the work vehicle. In the example of FIG. **1****,** the external sensors include a plurality of LiDAR sensors **140,** a plurality of cameras **120,** and a plurality of obstacle sensors **130.**

In addition to the positioning device **110,** the cameras **120,** the obstacle sensors **130,** the LiDAR sensors **140,** the sensor group **150,** a storage device **170,** the controller **180,** and an operation terminal **200,** the work vehicle **100** in the example of FIG. **2** also includes a communicator **190,** operation switches **210,** and a driver **240** (which may be referred to as a "first driver"). These component elements are communicably connected to one another via a bus.

As shown in FIG. **1****,** the work vehicle **100** includes a vehicle body **101,** a prime mover (engine) **102,** and a transmission **103.** On the vehicle body **101,** travel gear, which includes wheels **104** with tires, and a cabin **105** are provided. The travel gear includes four wheels **104,** and axles to cause the four wheels to rotate, and braking device (brakes) to brake on each wheel axle. The wheels **104** include a pair of front wheels **104F** and a pair of rear wheels **104R.** Inside the cabin **105,** a driver's seat **107,** a steering device **106,** an operation terminal 200, and switches for operation are provided. The front wheels **104F** and/or the rear wheels **104R** may be replaced by a plurality of wheels with a track (crawlers); rather than wheels with tires, attached thereto.

The prime mover **102** may be a diesel engine, for example. Instead of a diesel engine, an electric motor may be used. The transmission **103** can change the propulsion and the moving speed of the work vehicle **100** through a speed changing mechanism. The transmission **103** can also switch between forward travel and backward travel of the work vehicle **100.**

The steering device **106** includes a steering wheel, a steering shaft connected to the steering wheel, and a power steering device to assist in the steering by the steering wheel. The front wheels **104F** are the wheels responsible for steering, such that changing their angle of turn (also referred to as "steering angle") can cause a change in the traveling direction of the work vehicle **100.** The steering angle of the front wheels **104F** can be changed by operating the steering wheel. The power steering device includes a hydraulic device or an electric motor to supply an assisting force for changing the steering angle of the front wheels **104F.** When automatic steering is performed, under the control of the controller included in the work vehicle **100,** the steering angle may be automatically adjusted by the power of the hydraulic device or the electric motor.

A linkage device **108** is provided at the rear of the vehicle body **101.** The linkage device **108** includes, e.g., a three-point linkage (also referred to as a "three-point hitch" or a "three-point link"), a PTO (Power Take Off) shaft, a universal joint, and a communication cable. The linkage device **108** allows the implement **300** to be attached to, or detached from, the work vehicle **100.** The linkage device **108** is able to raise or lower the three-point hitch with a hydraulic device, for example, thus changing the position or attitude of the implement **300.** Moreover, motive power can be sent from the work vehicle **100** to the implement **300** via the universal joint. While towing the implement **300,** the work vehicle **100** allows the implement **300** to perform a predetermined task. The linkage device may be provided at the front portion of the vehicle body **101.** In that case, the implement can be connected at the front portion of the work vehicle **100.**

Although the implement **300** shown in FIG. **1** is a sprayer to spray a chemical agent onto a crop, the implement **300** is not limited to a sprayer. For example, any arbitrary implement such as a mower, a seeder, a spreader, a rake, a baler, a harvester, a plow, a harrow, or a rotary tiller may be connected to the work vehicle **100 for** use.

The positioning device **110** receives satellite signals (also referred to as GNSS signals) that are transmitted from a plurality of GNSS satellites, and performs positioning based on the satellite signals. GNSS is a collective term for satellite positioning systems such as the GPS (Global Positioning System), QZSS (Quasi-Zenith Satellite System, e.g., MICHIBIKI), GLONASS, Galileo, and BeiDou. Although the positioning device 110 in the present example embodiment is provided above the cabin **105,** it may be provided at any other position.

As shown in FIG. **2****,** the positioning device **110** includes a GNSS receiver **111,** an RTK receiver **112,** and a processing circuit **116.** The positioning device **110** may further include an inertial measurement unit (IMU) **115.**

The GNSS receiver **111** includes an antenna to receive signals from the GNSS satellites, and a processing circuit to determine the position of the work vehicle 100 based on the signals received by the antenna. The GNSS receiver **111** in the GNSS unit **110** receives satellite signals transmitted from the plurality of GNSS satellites and generates GNSS data based on the satellite signals. The GNSS data is generated in a predetermined format such as, for example, the NMEA-0183 format. The GNSS data may include, for example, the ID number, the angle of elevation, the azimuth angle, and a value representing the reception intensity of each of the satellites from which the satellite signals are received.

The positioning device **110** may perform positioning of the work vehicle **100** by utilizing an RTK (Real Time Kinematic)-GNSS. In the positioning based on the RTK-GNSS, not only satellite signals transmitted from a plurality of GNSS satellites, but also a correction signal that is transmitted from a reference station is used. The reference station may be provided near the work area where the work vehicle **100** performs tasked travel (e.g., at a position within 10 km of the work vehicle **100).** The reference station generates a correction signal of, for example, an RTCM format based on the satellite signals received from the plurality of GNSS satellites, and transmits the correction signal to the positioning device **110.** The RTK receiver **112,** which includes an antenna and a modem, receives the correction signal transmitted from the reference station. Based on the correction signal, the processing circuit **116** of the positioning device **110** corrects the results of the positioning performed by the GNSS receiver **111.** Use of the RTK-GNSS enables positioning with an accuracy on the order of several centimeters of errors, for example. Positional information including latitude, longitude, and altitude information is acquired through the highly accurate positioning by the RTK-GNSS. The positioning device **110** calculates the position of the work vehicle **100** as frequently as, for example, one to ten times per second. Note that the positioning method is not limited to being performed by using an RTK-GNSS; any arbitrary positioning method (e.g., an interferometric positioning method or a relative positioning method) that provides positional information with the necessary accuracy can be used. For example, positioning may be performed by utilizing a VRS (Virtual Reference Station) or a DGPS (Differential Global Positioning System).

The positioning device **110** according to the present example embodiment may further include the IMU **115.** With the inclusion of the IMU **115,** the positioning device **110** can complement position data by utilizing signals from the IMU **115.** The data acquired by the IMU **115** can be used to complement the position data based on the satellite signals, so as to improve the performance of positioning.

The IMU **115** may include a 3-axis accelerometer and a 3-axis gyroscope. The IMU **115** may include a direction sensor such as a 3-axis geomagnetic sensor. The IMU **115** functions as a motion sensor which can output signals representing parameters such as acceleration, velocity, displacement, and attitude of the work vehicle **100.** Based not only on the satellite signals and the correction signal but also on a signal that is output from the IMU **115,** the processing circuit **116** can estimate the position and orientation of the work vehicle **100** with a higher accuracy. The signal that is output from the IMU **115** may be used for the correction or complementation of the position that is calculated based on the satellite signals and the correction signal. The IMU **115** outputs a signal more frequently than the GNSS receiver **111.** For example, the IMU **115** outputs a signal as frequently as approximately several ten times to several thousand times per second. Utilizing this signal that is output highly frequently, the processing circuit **116** allows the position and orientation of the work vehicle **100** to be measured more frequently (e.g., about 10 Hz or above). Instead of the IMU **115,** a 3-axis accelerometer and a 3-axis gyroscope may be separately provided. The IMU **115** may be provided as a separate device from the positioning device **110.**

The sensor group **150** may include various sensors to detect the state of the work vehicle **100** or the implement **300** (i.e., internal sensors). For example, the sensor group **150** may include a steering wheel sensor **152,** an angle-of-turn sensor **154,** and an axle sensor **156.**

The steering wheel sensor **152** measures the angle of rotation of the steering wheel of the work vehicle **100.** The angle-of-turn sensor **154** measures the angle of turn of the front wheels **104F,** which are the wheels responsible for steering. Measurement values by the steering wheel sensor **152** and the angle-of-turn sensor **154** may be used for steering control by the controller **180.**

The axle sensor **156** measures the rotational speed, i.e., the number of revolutions per unit time, of an axle that is connected to the wheels **104.** The axle sensor **156** may be a sensor including a magnetoresistive element (MR), a Hall generator, or an electromagnetic pickup, for example. The axle sensor **156** outputs a numerical value indicating the number of revolutions per minute (unit: rpm) of the axle, for example. The axle sensor **156** is used to measure the speed of the work vehicle **100.** Measurement values from the axle sensor **156** can be utilized for the speed control by the controller **180.**

The storage device **170** includes one or more storage media such as a flash memory or a magnetic disc. The storage device **170** stores various data that is generated by the positioning device **110,** the cameras **120,** the obstacle sensors **130,** the LiDAR sensors **140,** the sensor group 150, and the controller **180.** The data that is stored by the storage device **170** may include an environment map of the environment where the work vehicle **100** travels, an obstacle map that is consecutively generated during travel, and path data for self-driving. The storage device **170** also stores a computer program(s) to cause each of the ECUs in the controller **180** to perform various operations described below. Such a computer program(s) may be provided to the work vehicle **100** via a storage medium (e.g., a semiconductor memory, an optical disc, etc.) or through telecommunication lines (e.g., the Internet). Such a computer program(s) may be marketed as commercial software.

The controller **180** may be configured or programmed to include the plurality of ECUs. The plurality of **ECUs** include, for example, the ECU **181** for speed control, the ECU **182** for steering control, the ECU **183** for implement control, and the ECU **184** for self-driving control.

The ECU **181** controls the prime mover **102,** the transmission **103,** and brakes included in the driver **240,** thus controlling the speed of the work vehicle **100.**

The ECU **182** controls the hydraulic device or the electric motor included in the steering device **106** based on a measurement value of the steering wheel sensor **152,** thus controlling the steering of the work vehicle **100.**

In order to cause the implement **300** to perform a desired operation, the ECU **183** controls the operations of the three-point hitch, the PTO shaft, and the like that are included in the linkage device **108.** Also, the ECU **183** generates a signal to control the operation of the implement **300,** and transmits this signal from the communicator **190** to the implement **300.**

Based on data output from the positioning device **110,** the cameras **120,** the obstacle sensors **130,** the LiDAR sensors **140,** and the sensor group **150,** the ECU **184** performs computation and control for achieving self-driving. For example, the ECU **184** estimates the position of the work vehicle **100** based on the data output from at least one of the positioning device **110,** the cameras **120,** and the LiDAR sensors **140.** In a situation where a sufficiently high reception intensity exists for the satellite signals from the GNSS satellites, the ECU **184** may determine the position of the work vehicle **100** based only on the data output from the positioning device **110.** On the other hand, in an environment where obstructions, such as trees, that may hinder reception of the satellite signals exist around the work vehicle **100,** e.g., an orchard, the ECU **184** estimates the position of the work vehicle **100** by using the data output from the LiDAR sensors **140** or the cameras **120.** During self-driving, the ECU **184** performs computation necessary for the work vehicle **100** to travel along a target path, based on the estimated position of the work vehicle **100.** The ECU **184** sends the ECU **181** a command to change the speed, and sends the ECU **182** a command to change the steering angle. In response to the command to change the speed, the ECU **181** controls the prime mover **102,** the transmission **103,** or the brakes to change the speed of the work vehicle **100.** In response to the command to change the steering angle, the ECU **182** controls the steering device **106** to change the steering angle.

Through the actions of these ECUs, the controller **180** realizes self-traveling. During self-traveling, the controller **180** is configured or programmed to control the driver **240** based on the measured or estimated position of the work vehicle **100** and on the consecutively-generated target path. As a result, the controller **180** can cause the work vehicle **100** to travel along the target path.

The plurality of ECUs included in the controller **180** can communicate with one another in accordance with a vehicle bus standard such as, for example, a CAN (Controller Area Network). Instead of a CAN, faster communication methods such as Automotive Ethernet (registered trademark) may be used. Although the ECUs **181** to **184** are illustrated as individual blocks in FIG. **2****,** the function of each of the ECU **181** to **184** may be implemented by a plurality of ECUs. Alternatively, an onboard computer that integrates the functions of at least some of the ECUs **181** to **184** may be provided. The controller **180** may include ECUs other than the ECUs **181 to 184,** and any number of ECUs may be provided in accordance with functionality. Each ECU includes a processing circuit including one or more processors.

The cameras **120** may be provided at the front/rear/right/left of the work vehicle **100,** for example. The cameras **120** image the surrounding environment of the work vehicle **100** and generate image data. The images acquired with the cameras **120** may be transmitted to the terminal device, which is responsible for remote monitoring, for example. The images may be used to monitor the work vehicle **100** during unmanned driving. The cameras **120** may be provided according to the needs, and any number of them may be provided.

The LiDAR sensors **140** are one example of external sensors that output sensor data indicating a distribution of geographic features around the work vehicle **100.** In the example of FIG. **1****,** two LiDAR sensors **140** are provided on the cabin **105,** at the front and the rear. The LiDAR sensors **140** may be provided at other positions (e.g., on a lower portion of a front face of the vehicle body **101).** While the work vehicle **100** is traveling, each LiDAR sensor **140** repeatedly outputs sensor data representing the distances and directions of measurement points on objects existing in the surrounding environment, or two-dimensional or three-dimensional coordinate values of such measurement points. The number of LiDAR sensors **140** is not limited to two, but may be one, or three or more.

The LiDAR sensors **140** may be configured to output two-dimensional or three-dimensional point cloud data as sensor data. In the present specification, "point cloud data" broadly means data indicating a distribution of multiple reflection points that are observed with the LiDAR sensors **140.** The point cloud data may include coordinate values of each reflection point in a two-dimensional space or a three-dimensional space or information indicating the distance and direction of each reflection point, for example. The point cloud data may include information on luminance of each reflection point. The LiDAR sensors **140** may be configured to repeatedly output point cloud data with a predesignated cycle, for example. Thus, the external sensors may include one or more LiDAR sensors **140** that output point cloud data as sensor data.

The sensor data that is output from the LiDAR sensors **140** is processed by a controller configured or programmed to control self-traveling of the work vehicle **100.** During travel of the work vehicle **100,** based on the sensor data that is output from the LiDAR sensors **140,** the controller can consecutively generate an obstacle map indicating a distribution of objects existing around the work vehicle **100.** The controller may generate an environment map by joining together obstacle maps with the use of an algorithm such as SLAM, for example, during self-traveling. The controller can perform estimation of the position and orientation of the work vehicle **100** (i.e., localization) by matching the sensor data against the environment map.

The plurality of obstacle sensors **130** shown in FIG. **1** are provided at the front and the rear of the cabin **105.** The obstacle sensors **130** may be provided at other positions. For example, one or more obstacle sensors **130** may be provided at any position at the sides, the front, or the rear of the vehicle body **101.** The obstacle sensors **130** may include, for example, laser scanners or ultrasonic sonars. The obstacle sensors **130** may be used to detect obstacles in the surroundings during self-traveling to cause the work vehicle **100** to halt or detour around the obstacles.

The controller of the work vehicle **100** may be configured or programmed to utilize, for positioning, the sensor data acquired with the sensing devices such as the cameras **120** or the LIDAR sensors **140,** in addition to the results of positioning provided by the positioning device **110.** In the case where geographic features serving as characteristic points exist in the environment that is traveled by the work vehicle **100,** as in the case of an agricultural road, a forest road, a general road, or an orchard, the position and the orientation of the work vehicle **100** can be estimated with a high accuracy based on data that is acquired with the cameras **120** or the LiDAR sensors **140** and on an environment map that is previously stored in the storage device. By correcting or complementing position data based on the satellite signals using the data acquired with the cameras **120** or the LiDAR sensors **140,** it becomes possible to identify the position of the work vehicle **100** with a higher accuracy.

The work vehicle **100** and the implement **300** can communicate with each other via a communication cable that is included in the linkage device **108.** The work vehicle **100** is able to communicate with a terminal device **400** to perform remote monitoring via a network **80.** The terminal device **400** may be any arbitrary computer, e.g., a personal computer (PC), a laptop computer, a tablet computer, or a smartphone, for example.

The implement **300** includes a driver **340** (which may be referred to as the "second driver"), a driver **340,** a controller **380,** and a communicator **390.** Note that FIG. **2** shows component elements which are relatively closely related to the operations of self-driving by the work vehicle **100,** while other components are omitted from illustration.

The cameras **120** are imagers that image the surrounding environment of the work vehicle **100.** Each camera **120** includes an image sensor such as a CCD (Charge Coupled Device) or a CMOS (Complementary Metal Oxide Semiconductor), for example. In addition, each camera **120** may include an optical system including one or more lenses and a signal processing circuit. During travel of the work vehicle **100,** the cameras **120** image the surrounding environment of the work vehicle **100,** and generate image (e.g., motion picture) data. The cameras **120** are able to capture motion pictures at a frame rate of 3 frames/second (fps: frames per second) or greater, for example. The images generated by the cameras **120** may be used by a remote supervisor to check the surrounding environment of the work vehicle **100** with the terminal device **400,** for example. The images generated by the cameras **120** may also be used for the purpose of positioning or detection of obstacles. As shown in FIG. **1****,** the plurality of cameras **120** may be provided at different positions on the work vehicle **100,** or a single camera **120** may be provided. A visible camera(s) to generate visible images and an infrared camera(s) to generate infrared images may be separately provided. Both of a visible camera(s) and an infrared camera(s) may be provided as a camera(s) for generating images for monitoring purposes. The infrared camera(s) may also be used for detection of obstacles at nighttime.

An obstacle sensor **130** detects objects around the work vehicle **100.** The obstacle sensor **130** may include a laser scanner or an ultrasonic sonar, for example. When an object exists at a position closer to the obstacle sensor **130** than a predetermined distance, the obstacle sensor **130** outputs a signal indicating the presence of an obstacle. A plurality of obstacle sensors **130** may be provided at different positions of the work vehicle **100.** For example, a plurality of laser scanners and a plurality of ultrasonic sonars may be provided at different positions of the work vehicle **100.** Providing a multitude of obstacle sensors **130** can reduce blind spots in monitoring obstacles around the work vehicle **100.**

The driver **240** includes various types of devices required to cause the work vehicle **100** to travel and to drive the implement **300;** for example, the prime mover **102,** the transmission **103,** the steering device **106,** the linkage device **108** and the like described above. The prime mover **102** may include an internal combustion engine such as, for example, a diesel engine. The driver **240** may include an electric motor for traction instead of, or in addition to, the internal combustion engine.

The communicator **190** includes a circuit to communicate with the implement **300** and the terminal device **400.** The communicator **190** includes circuitry to perform exchanges of signals complying with an ISOBUS standard such as ISOBUS-TIM, for example, between itself and the communicator **390** of the implement **300.** This allows the implement **300** to perform a desired operation, or allows information to be acquired from the implement **300.** The communicator **190** may further include an antenna and a communication circuit to exchange signals via the network **80** with the terminal device **400.** The network **80** may include a 3G, 4G, 5G, or any other cellular mobile communications network and the Internet, for example. The communicator **190** may have a function of communicating with a mobile terminal that is used by a supervisor who is situated near the work vehicle **100.** With such a mobile terminal, communication may be performed based on any arbitrary wireless communication standard, e.g., Wi-Fi (registered trademark), 3G, 4G, 5G or any other cellular mobile communication standard, or Bluetooth (registered trademark).

The operation terminal **200** is a terminal for the user to perform an operation related to the travel of the work vehicle **100** and the operation of the implement **300,** and is also referred to as a virtual terminal (VT). The operation terminal **200** may include a display device such as a touch screen panel, and/or one or more buttons. The display device may be a display such as a liquid crystal display or an organic light-emitting diode (OLED) display, for example. By operating the operation terminal **200,** the user can perform various operations, such as, for example, switching ON/OFF the self-driving mode, switching ON/OFF a recording (teaching) mode and a reproducing (playback) mode as will be described below/, and switching ON/OFF the implement **300.** At least some of these operations may also be realized by operating the operation switches **210.** The operation terminal **200** may be configured so as to be detachable from the work vehicle **100.** A user who is at a remote place from the work vehicle **100** may manipulate the detached operation terminal **200** to control the operation of the work vehicle **100.** The operation terminal **200** may include a storage device. In place of the storage device **170,** the storage device in the operation terminal **200** may store various data that is necessary for the operation of the work vehicle **100.**

The driver **340** in the implement **300** shown in FIG. **2** performs necessary operations for the implement **300** to perform predetermined tasks. The driver **340** includes a device that is adapted to the use of the implement **300,** e.g., a hydraulic device, an electric motor, or a pump. The controller **380** configured or programmed to control the operation of the driver **340.** In response to signals that are transmitted from the work vehicle **100** via the communicator **390,** the controller **380** is configured or programmed to cause the driver **340** to perform various operations. Moreover, a signal that is in accordance with the state of the implement **300** may be transmitted from the communicator **390** to the work vehicle **100.**

A travel control system according to an example embodiment of the present disclosure will be described. The travel control system according to the present example embodiment of the present disclosure is applicable to the above-described work vehicle **100,** for example. Although the examples of FIG. **1** and FIG. **2** illustrate the implement **300** as being linked to the work vehicle **100,** it is not essentially required for the implement **300** to be linked to the work vehicle **100.** In other words, the travel control system according to the present example embodiment of the present disclosure is applicable also to the work vehicle **100** without the implement **300** linked thereto.

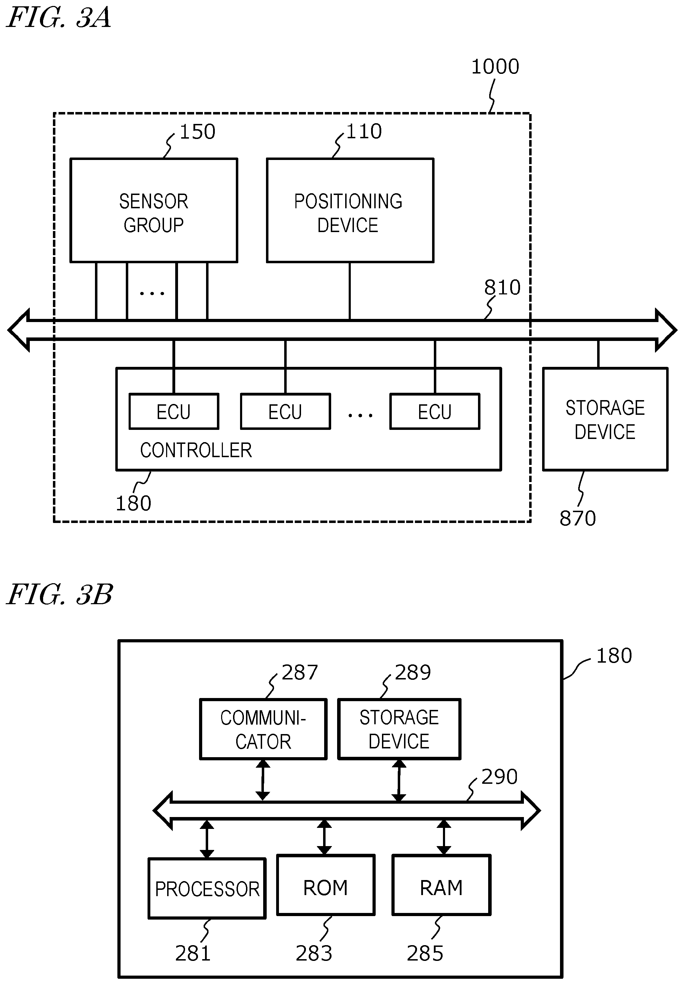

FIG. **3A** is a block diagram showing a schematic example configuration for the travel control system **1000** according to the present example embodiment of the present disclosure. As shown in FIG. **3A****,** the travel control system **1000** according to the present example embodiment includes: a positioning device **110** to detect the position of the work vehicle **100** and output position data; one or more sensors (sensor group) **150** to detect the state of the work vehicle **100** and output sensor data; and a controller **180** configured or programmed to control the operation of the work vehicle **100.** In the present example embodiment, as shown in FIG. **2****,** the positioning device **110,** the sensor group **150,** and the controller **180** are provided in the work vehicle **100.** Working in cooperation with the positioning device **110** and the sensor group **150,** the controller **180** is configured or programmed to function as the travel control system **1000** of the work vehicle **100.** The controller **180,** the positioning device **110,** and the sensor group **150** may be communicably connected to one another via a bus **810.**

FIG. **3A** also shows a storage device **870,** to which information that is acquired by the controller **180** is recorded. The storage device **870** may be included in the control system **1000,** or be an external element to the control system **1000.** The storage device **870** may be mounted in the work vehicle **100,** or mounted in the implement **300.** The storage device **870** may be communicably connected to the controller **180** via the **810.** For example, the storage device **870** may be the storage device **170** shown in FIG. **2****,** or a storage device that is included in the operation terminal **200.** The operation terminal **200** may be included in the travel control system **1000.** The storage device **870** may be located outside of the work vehicle **100** and the implement **300.** When located outside of the work vehicle **100** and the implement **300,** the storage device **870** may be connected to the controller **180** via a communications network.

In the example shown in FIG. **1****,** the positioning device **110** is mounted to the work vehicle **100;** however, the positioning device **110** may be mounted to the implement **300** that is linked to the work vehicle **100.** In addition to or instead of the positioning device mounted to the work vehicle **100,** a positioning device (e.g., a GNSS unit) that is mounted to the implement **300** may function as a positioning device **110** of the travel control system **1000.** Strictly speaking, a position that is measured by a positioning device that is mounted to the work vehicle **100** or the implement **300** is the position of a point at which the positioning device exists, but this position is referred to as the "position of the work vehicle" in the present specification.

Without being limited to the steering wheel sensor **152,** the angle-of-turn sensor **154,** and the axle sensor **156** mentioned above, various sensors that are mounted in the work vehicle **100** may be included in the sensor group **150.** For example, the sensor group **150** may include one or more sensors selected from among: a temperature sensor, an illuminance sensor, a fuel sensor, a water temperature sensor, an oil level gauge, an engine speed sensor, a vehicle speed sensor, a battery voltage sensor, a shuttle sensor, a hand accelerator sensor, an accelerator pedal sensor, a main shift lever sensor, a range shift lever sensor, a seat belt sensor, a PM sensor, an acceleration sensor, an angular velocity sensor, an IMU (Inertial Measurement Unit), and a geomagnetic sensor. The sensor group **150** may include a PTO sensor to detect rotation ON/OFF of the PTO shaft and/or a 3P position sensor to detect the position in the height direction (which hereinafter may be simply referred to as "height") of the three-point hitch. Furthermore, in addition to or instead of one or more sensors mounted on the work vehicle **100,** one or more sensors that are mounted on the implement **300** may be included in the sensor group **150** of the travel control system **1000.**

In the example shown in FIG. **3A****,** the controller **180** may be configured or programmed to include a plurality of ECUs. These ECUs may include the ECUs **181 to 184** illustrated in FIG. **2****,** for example. However, the controller **180** may be a single ECU or other computing device. FIG. **3B** is a block diagram showing an example configuration for such a controller **180.** In the example of FIG. **3B****,** the controller **180** is configured or programmed to include a processor **281,** a ROM (Read Only Memory) **283,** a RAM (Random Access Memory) **285,** a communicator **287,** and a storage device **289.** These component elements may be connected to one another via a bus **290.**

The processor **281** may be a semiconductor integrated circuit, also called a central processing unit (CPU) or a microprocessor. The processor **281** may include a graphics processing unit (GPU). The processor **281** consecutively executes a computer program describing predetermined instructions and being stored in the ROM **283,** and achieves processes that are necessary for the travel control system according to the present disclosure. The controller **180** may be configured or programmed to include a plurality of processors **281.** The plurality of processors **281** may work in cooperation to perform the processes that are necessary for the travel control system according to the present disclosure. A portion or a whole of the processor **281** may be an FPGA (Field Programmable Gate Array), an ASIC (Application Specific Integrated Circuit), or an ASSP (Application Specific Standard Product) incorporating a CPU.

The communicator **287** is an interface to perform data communications between the controller **180** and an external computing device. The communicator **287** is capable of wired communications via a CAN (Controller Area Network) or the like, or wireless communications compliant with the Bluetooth (registered trademark) standards and/or the Wi-Fi (registered trademark) standards.

The storage device **289** can store: position data acquired from the positioning device **110;** sensor data acquired from the sensor group **150;** position data and/or sensor data in the middle of processing; data of first information acquired from the position data and second information acquired from the sensor data; and the like. The storage device **289** includes a hard disk drive or a non-volatile semiconductor memory, for example. In this example, the storage device **289** may serve as the storage device **870** in the example of FIG. **3A****.**

The hardware configuration of the controller **180** is not limited to the above example. It is not necessary for a portion or a whole of the controller **180** to be mounted in the work vehicle **100.** By utilizing the communicator **287,** a computing device or computing devices located outside the work vehicle **100** may be allowed to function as a portion or a whole of the controller **180.** For example, a computing device or computing devices included in a server computer(s) and/or a terminal device(s) that is connected to a network may function as a portion or a whole of the controller **180.** On the other hand, a computing device or computing devices that is mounted in the work vehicle **100** may perform all functions required of the controller **180.**

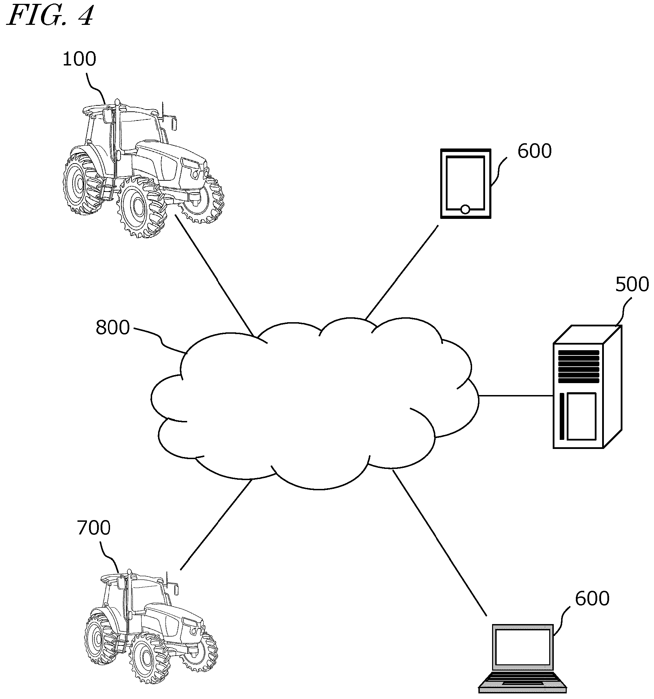

FIG. **4** is a schematic diagram showing another example configuration for a travel control system according to an example embodiment of the present disclosure. The system shown in FIG. **4** includes the work vehicle **100,** another work vehicle **700,** a server computer **500,** and a plurality of terminal devices **600.** The terminal devices **600** may be either mobile or stationary terminal devices. A portion or a whole of the functionality of the controller **180** shown in FIG. **3B** may be realized by one or more computing devices that are connected to the communicator **287** of the controller **180** of the work vehicle **100** via a communications network **800.** Such a computing device(s) may be the server computer **500** or the terminal device(s) **600.** This communications network **800** may have the other work vehicle (e.g., agricultural machine) **700** connected thereto. Communication may be performed between the controller **180** of the work vehicle **100** and the other work vehicle **700.** Via the communications network **800,** a portion of the data to be used for the processing by the controller **180** of the work vehicle **100** may be supplied from the other work vehicle **700** to the controller **180.** For example, waypoint information defining a path and a series of operations as generated by the controller of the other work vehicle **700** may be transmitted from the other work vehicle **700** to the controller **180** of the work vehicle **100.** Based on the waypoint information, the controller **180** can perform a playback operation in a reproducing mode as will be described below.

As shown in FIG. **3B****,** an example of the "controller" in the present disclosure is a computing device that includes at least one processor and at least one memory storing a computer program (code) defining control processes to be executed by the processor. The "controller" may be a computing device equipped with an FPGA (Field-Programmable Gate Array), an ASSP (Application Specific Standard Product), an ASIC (Application-Specific Integrated Circuit), or other hardware accelerators configured to execute the control processes.

A "processor" in the present disclosure is a hardware electronic circuit such as a CPU (Central Processing Unit), a GPU (Graphics Processing Unit), a DSP (Digital Signal Processor), an ISP (Image Signal Processor), or an NPU (Neural Network Processing Unit). A "memory" is a hardware electronic circuit such as a ROM (Read Only Memory) or a RAM (Random Access Memory). A portion of the memory may be a storage medium that is connected to the processor via interconnects or a network. These hardware electronic circuits may be implemented by one or more integrated circuits (IC) or large-scale integrated circuits (LSI). Each functional unit or block and its associated components within the electronic circuit may be individually manufactured as an individual integrated circuit chip, or a portion or a whole of these functional units or blocks may be combined so as to be manufactured as a single integrated circuit chip.

A program defining the operation of a processor is designed so that the processor will execute one or more functions, operations, steps, or process according to an example embodiment of the present disclosure.

As will be described below, the travel control system **1000** is configured or programmed to control the operation of the work vehicle **100** by using a so-called teaching-playback method, which is used in the fields of robot control. The controller **180** of the travel control system **1000** may be configured or programmed to operate in a recording mode and a reproducing mode. The recording mode is a mode in which multiple positions (hereinafter also referred to as "waypoints") defining a travel path of the work vehicle **100** and operations at the respective waypoints are recorded. The reproducing mode is a mode in which the travel path of the work vehicle **100** and the operations at the respective waypoints that were recorded in the recording mode are reproduced. The operations in the recording mode and the reproducing mode correspond to, respectively, an operation of teaching and an operation of playback in the teaching-playback method. The operations of the controller **180** in the recording mode and the reproducing mode may be referred to as "teaching" and "playback", respectively. The recording mode may be referred to as the "teaching mode", and the reproducing mode as the "playback mode".

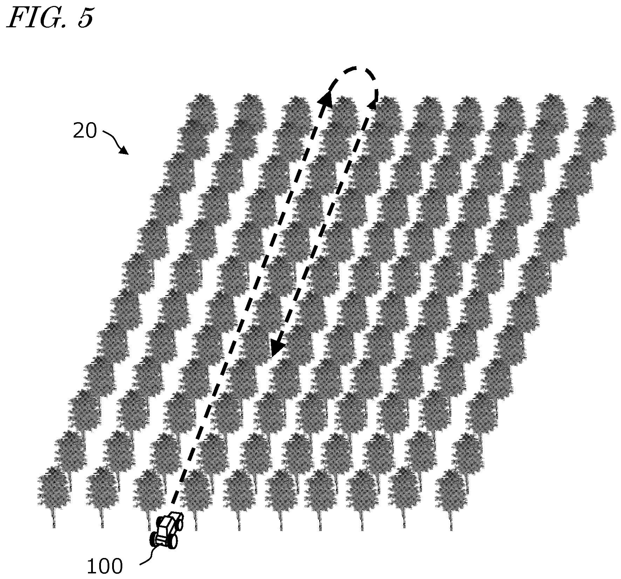

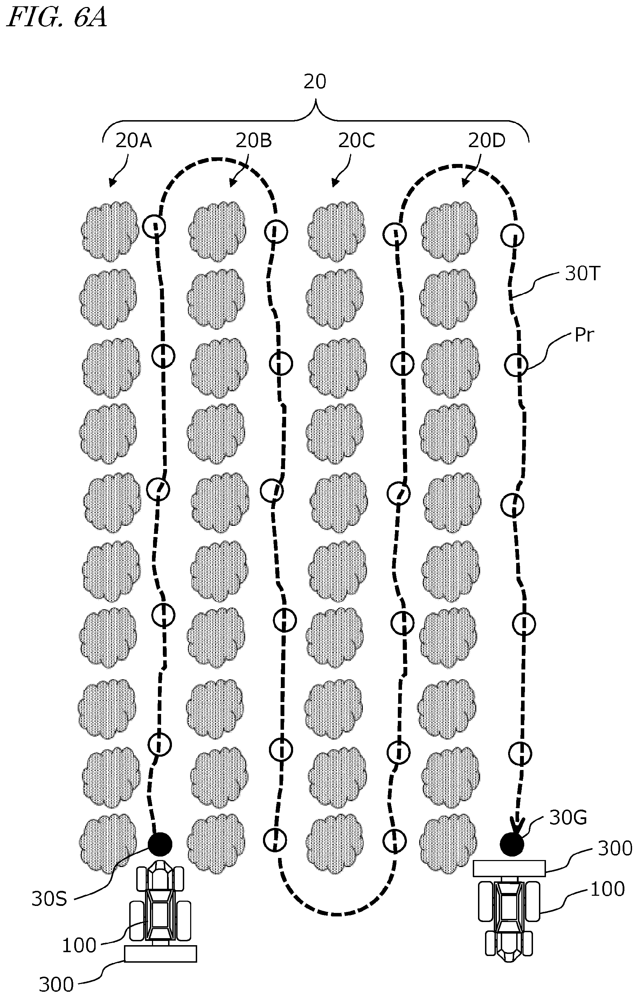

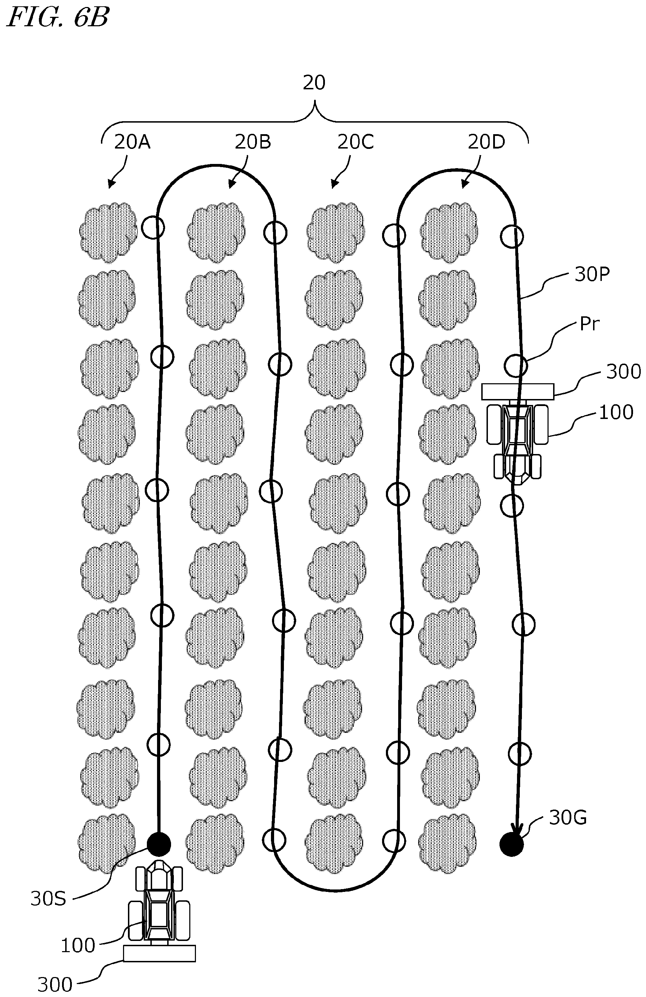

With reference to FIG. **5****,** FIG. **6A** and FIG. **6B****,** operations of the controller **180** of the travel control system **1000** in the recording mode and the reproducing mode will be described. FIG. **5** is a diagram schematically showing an example of an environment in which the work vehicle **100** travels. FIG. **6A** is a diagram schematically showing an example of a path **30T** that is traveled by the work vehicle **100** in the recording mode. FIG. **6B** is a diagram schematically showing an example of a path **30P** that is traveled by the work vehicle **100** in the reproducing mode. In this example, the work vehicle **100** performs predetermined tasks (e.g., mowing, preventive pest control, seeding, manure spreading, etc.) by using the implement **300,** while traveling among the plurality of rows of trees **20** (hereinafter also referred to as "crop rows **20")** in an orchard such as a vineyard.

In the recording mode, in the example of FIG. **6A****,** the work vehicle **100** performs travel while performing work by the implement **300.** In the example of FIG. **6A****,** the work vehicle **100** travels along the path **30T** from a start point **30S** to an end point **30G.** FIG. **6A** illustrates a state where the work vehicle **100** is located before the start point **30S** and a state where the work vehicle **100** is located at a point beyond the end point **30G.** In the recording mode, while the work vehicle **100** is traveling, the controller **180** records multiple pieces of waypoint information to the storage device **870,** based on position data that is output from the positioning device **110** and sensor data that is output from the sensor group **150.** Each of the multiple pieces of waypoint information includes first information concerning the position of the work vehicle **100** and second information concerning the state of the work vehicle **100.** The first information and second information included in each of the multiple pieces of waypoint information indicate a position of the work vehicle **100** and the state of the work vehicle **100** at that position, respectively. Therefore, the first information may be referred to as "positional information", and the second information may be referred to as "state information". Multiple pieces of first information that are included in multiple pieces of waypoint information represent the path **30T** that has been traveled by the work vehicle **100.** Each of the multiple pieces of second information that are included in the multiple pieces of waypoint information is recorded in association with the corresponding first information. As each of the multiple pieces of second information that are included in the multiple pieces of waypoint information is recorded in association with the corresponding first information, information on the state of the work vehicle **100** at each position on the path **30T** that has been traveled by the work vehicle **100** becomes recorded. For example, as shown in FIG. **6A****,** at each of the multiple positions (waypoints) **Pr** on the path **30T** having been traveled, first information and second information are acquired and recorded as waypoint information.

In the recording mode, the work vehicle **100** may perform manual traveling via manual operation of the driver, or self-traveling via self-driving. When the work vehicle **100** performs self-traveling in the recording mode, the work vehicle **100** may autonomously travel without involving manual operation of the driver, or perform self-traveling but travel partly based on manual operation of the driver. For example, an automatic steering control may be performed during travel in the recording mode, such that the driver performs control of the traveling speed of the work vehicle **100** while steering control is automatically performed. Alternatively, during travel in the recording mode, the work vehicle **100** may perform self-traveling, while the implement **300** operates via manual operation of the driver. Manual operation of the driver includes not only manual operation of the driver on the work vehicle **100,** but also remote operation by a driver (operator) outside the work vehicle **100.** Such remote operations may be performed by using the terminal devices **600** shown in FIG. **4****,** or other remote operation devices, for example.

The second information broadly includes information concerning states of the work vehicle **100** other than its position. The second information includes information concerning operation of the work vehicle **100,** e.g., a traveling state, for example. The traveling state of the work vehicle **100** is defined by velocity, acceleration (i.e., rate of change in velocity per unit time), traveling direction (azimuth), and the like of the work vehicle **100.** Information concerning the traveling state of the work vehicle **100** includes any one or more of information on the velocity of the work vehicle **100,** information on the engine speed of the work vehicle **100,** information on the acceleration of the work vehicle **100,** information on the azimuth of the work vehicle **100,** information on the steering angle of the wheels responsible for steering of the work vehicle **100,** information on the gear ratio of the transmission **103** of the work vehicle **100,** and the like, for example. The second information may include information on the attitude of the work vehicle **100.** Information of the attitude of the work vehicle **100** includes information on the azimuth of the work vehicle **100,** for example. Without being limited to information concerning the operation of the work vehicle **100,** the second information may include information on the temperature of the work vehicle **100** (e.g., temperature of the engine coolant), information concerning the presence/absence of problems of the work vehicle **100** (e.g., Diagnostic Trouble Code: DTC), and the like, for example. Specific examples of methods of acquiring the second information will be described later.

The second information may include information concerning the state of the linkage device **108** for enabling linking of the implement **300.** The linkage device **108** may include the PTO shaft for supplying motive power to the implement **300** and a three-point hitch for adjusting the height of the implement **300,** for example. Information concerning the state of the linkage device **108** may include any one or more of: information on rotation ON or OFF of the PTO shaft; and information on the height of the three-point hitch; for example.

In a case where the work vehicle **100** has the implement **300** linked thereto, the second information may include, in addition to information concerning the state of the work vehicle **100,** information concerning the state of the implement **300.** For example, in a case where the implement **300** has a positioning device mounted thereto, information on the position or azimuth (e.g., angle with respect to a reference azimuth) of the implement **300** may be included in the second information. Alternatively, in a case where a sensor to detect the operation of a movable structure in the implement **300** is provided in the implement **300,** information that is detected by that sensor may be included in the second information.

In the reproducing mode, the work vehicle **100** performs travel via self-driving. While causing the work vehicle **100** to perform self-traveling based on the first information and second information included in multiple pieces of waypoint information recorded in the recording mode, the controller **180** is configured or programmed to control the operation of the work vehicle **100.** In the example of FIG. **6B****,** based on the first information (positional information) and the second information (state information) included in the multiple pieces of waypoint information recorded when traveling along the path **30T** (see FIG. **6A****)** in the recording mode, the work vehicle **100** performs self-traveling. In the reproducing mode, the controller **180** is configured or programmed to cause the work vehicle **100** to travel along a target path **30P** that is defined by the first information included in the multiple pieces of waypoint information recorded in the recording mode. For example, the controller **180** is configured or programmed to perform steering control for the work vehicle **100** so as to reduce or minimize deviations of the position and orientation (azimuth) of the work vehicle **100** with respect to the target path **30P.** This allows the work vehicle **100** to travel along the target path **30P.** In the reproducing mode, the work vehicle **100** is able to automatically reproduce the operation of the work vehicle **100** that was recorded in the recording mode.

The reproducing mode is begun in a state where the work vehicle **100** is located at the start point **30S** of the target path **30P,** for example. As the work vehicle **100** reaches the end point **30G** of the target path **30P,** for example, the controller **180** ends the reproducing mode. FIG. **6B** illustrates a state where the work vehicle **100** is located before the start point **30S** and a state where the work vehicle **100** is located somewhere along the path **30P.**

As in the examples of FIG. **6A** and FIG. **6B****,** in a case where the work vehicle **100** has the implement **300** linked thereto, based on the first information and second information included in multiple pieces of waypoint information recorded in the recording mode, the controller **180** can be configured or programmed to control the operations of the work vehicle **100** and the implement **300,** while causing the work vehicle **100** to perform self-traveling. In other words, in the reproducing mode, the work vehicle **100** can automatically reproduce not only the operation of the work vehicle **100** that was recorded in the recording mode, but also the operation of the implement **300.**

With the travel control system according to the present example embodiment, in the reproducing mode, it is possible to reproduce the operation of the work vehicle **100** that was recorded in the recording mode, such that iterative operations of the work vehicle **100** can be efficiently performed. In the recording mode, the second information concerning the state of the work vehicle **100** other than its position is recorded in association with the first information concerning the position of the work vehicle **100,** thus promoting automation and unmanned execution of the operation of the work vehicle **100.**

In a case where the work vehicle **100** has the implement **300** linked thereto, in the reproducing mode, the work vehicle **100** can automatically reproduce not only the operation of the work vehicle **100** that was recorded in the recording mode, but also the operation of the implement **300,** such that iterative work to be performed by the implement **300** can be efficiently carried out. In the recording mode, second information concerning the state of the implement **300** is recorded in association with the first information concerning the position of the work vehicle **100,** thus promoting automation and unmanned execution of the work by the implement **300.**

In the examples of FIG. **6A** and FIG. **6B**, the work vehicle **100** travels along the path **30T** or the path **30P** among the plurality of rows of trees **20.** More specifically, the work vehicle **100** travels between two adjacent rows of trees **20,** and turns in a headland before and after the travel between the two adjacent rows of trees **20.** A headland is a region between an end of each row of trees and the boundary of the orchard. Specifically, the following operation may be performed. Let the plurality of rows of trees **20** be sequentially designated as a first row of trees **20A**, a second row of trees **20B**, a third row of trees **20C,** a fourth row of trees **20D,.**.., from the end. From the start point **30S**, the work vehicle **100** first travels between the first row of trees **20A** and the second row of trees **20B**, and upon completing this travel, turns right to travel between the second row of trees **20B** and the third row of trees **20C** in the opposite direction. Once the travel between the second row of trees **20B** and the third row of trees **20C** is completed, it further turns left to travel between the third row of trees **20C** and the fourth row of trees **20D.** Thereafter, by repeating a similar operation, the work vehicle **100** travels to the end point **30G** of the path **30T** or the path **30P.**

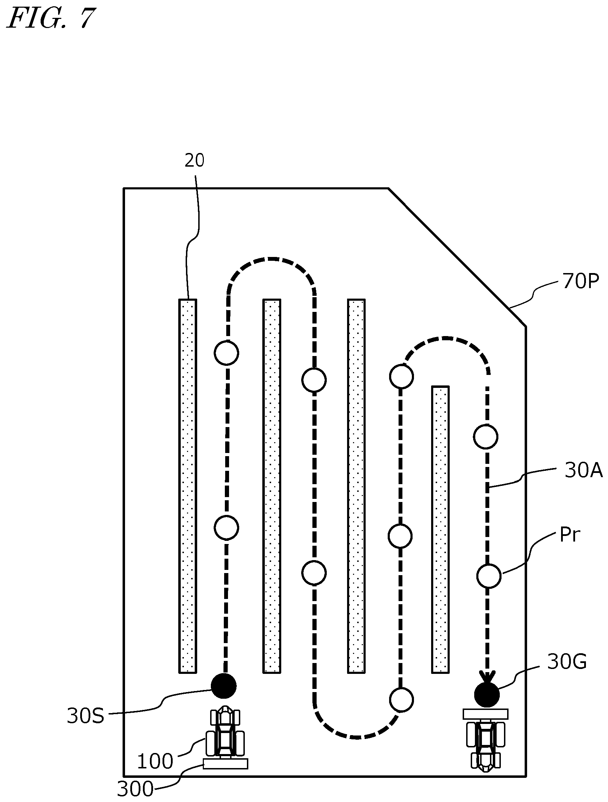

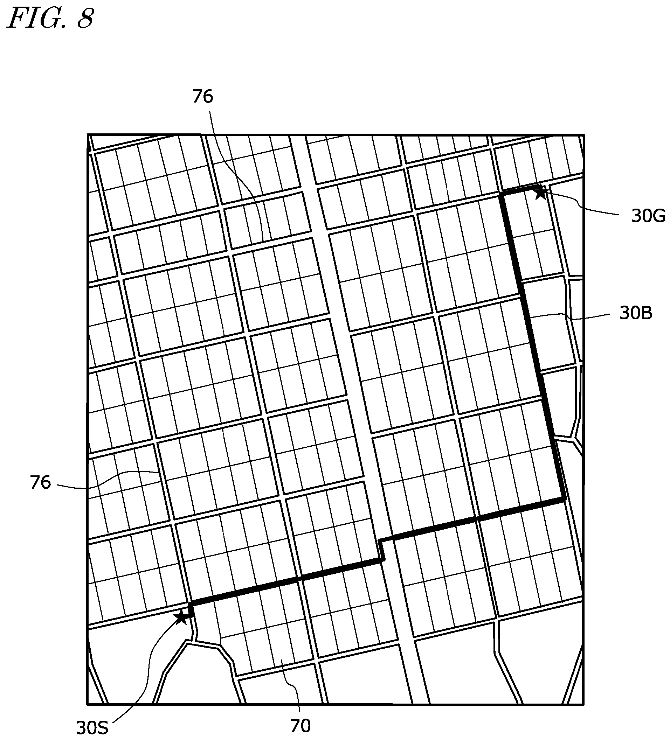

FIG. **7** and FIG. **8** are diagrams schematically showing other examples of paths that are traveled by the work vehicle **100.**

FIG. **7** shows, in a non-rectangular field **70P,** a path **30A** along which the work vehicle **100** travels among a plurality of crop rows **20.** In the recording mode, the work vehicle **100** travels along the path **30A** from a start point **30S** to an end point **30G.** In the reproducing mode, the controller **180** causes the work vehicle **100** to perform self-traveling along a target path that is defined by the first information included in multiple pieces of waypoint information recorded in the recording mode. As shown in FIG. **7****,** autonomous travel may not be easy in a non-rectangular field because the crop rows **20** may differ from one another in length. By using the travel control system according to the present example embodiment, iterative operations of the work vehicle **100** can be efficiently performed even in a non-rectangular field, thereby promoting automation and unmanned execution of the operation of the work vehicle **100.**

FIG. **8** shows a path **30B** along which the work vehicle **100** travels, outside the fields **70.** The region depicted in FIG. **8** includes a number of fields **70** where the work vehicle **100** performs agricultural work, and roads **76** around the fields. The roads **76** may be agricultural roads. In the recording mode, the work vehicle **100** travels along the path **30B** from a start point **30S** to an end point **30G.** In the reproducing mode, the controller **180** causes the work vehicle **100** to perform self-traveling along a target path that is defined by the first information included in multiple pieces of waypoint information recorded in the recording mode. As shown in FIG. **8****,** the travel control system according to the present example embodiment is also applicable to travel that is performed outside the fields. For example, it is suitably applicable to any manner of travel that is performed iteratively, e.g., movements of the work vehicle **100** from field to field or movements of the work vehicle **100** between its storage location and a field. In such a case, iterative operations (which herein are movements) of the work vehicle **100** can be efficiently performed, thus promoting automation and unmanned execution of the operation (which herein is movement) of the work vehicle **100.**

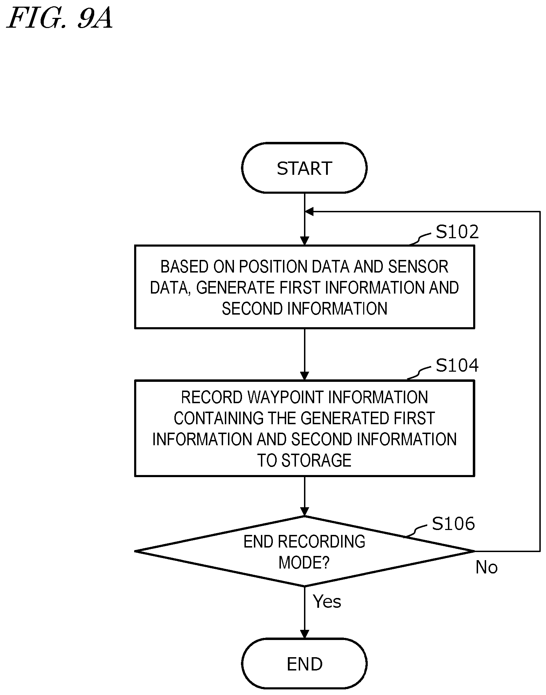

FIG. **9A** is a flowchart showing an example processing to be performed in the recording mode.

The timing of beginning the recording mode is designated by the user, for example. For instance, the controller **180** may begin the recording mode when a signal including an instruction to begin the recording mode is transmitted to the controller **180** through an operation of the driver. For instance, the driver on the work vehicle **100** can transmit a signal including an instruction to begin the recording mode to the controller **180** by operating an input device such as the operation terminal **200** or a predetermined operation switch provided in the work vehicle **100.** The recording mode may be begun during travel of the work vehicle **100,** or begun while the work vehicle **100** is at a halt.

Once the recording mode is begun, then at step **S102,** while the work vehicle **100** is traveling, the controller **180** generates first information and second information based on position data that is output from the positioning device **110** and sensor data that is output from the sensor group **150.** For example, the controller **180** may calculate the position (i.e., coordinates) of a reference point on the work vehicle **100** based on position data that is output from the positioning device **110,** and generate (acquire) information indicating this position as the first information. Based on the position data that is output from the positioning device **110** and information indicating a relative position relationship between the positioning device **110** and the work vehicle **100** that is recorded in the storage device in advance, the controller **180** may be configured or programmed to calculate the position of the reference point on the work vehicle **100.** Moreover, as the second information, the controller **180** may generate, based on sensor data that is output from the sensor group **150,** information that is necessary to control various actuators to be driven during playback.

The first information and second information may be generated at any arbitrary timing. The first information and second information may be generated each time the work vehicle **100** travels a certain distance, or each time a certain period passes, for example. The aforementioned certain distance (e.g., distance between two adjacent waypoints **Pr** along the traveling direction of the work vehicle **100** in the example of FIG. **6A****)** may be set to a value on the order of several ten centimeters (cm) to several meters (m), for example. The aforementioned certain period may be set to a value in the range from 1 second to 10 seconds, for example.

At step **S104,** the controller **180** records waypoint information including the first information and second information generated in step **S102** to the storage device **870** (see FIG. **3A****).** The first information and second information are recorded in association with each other.

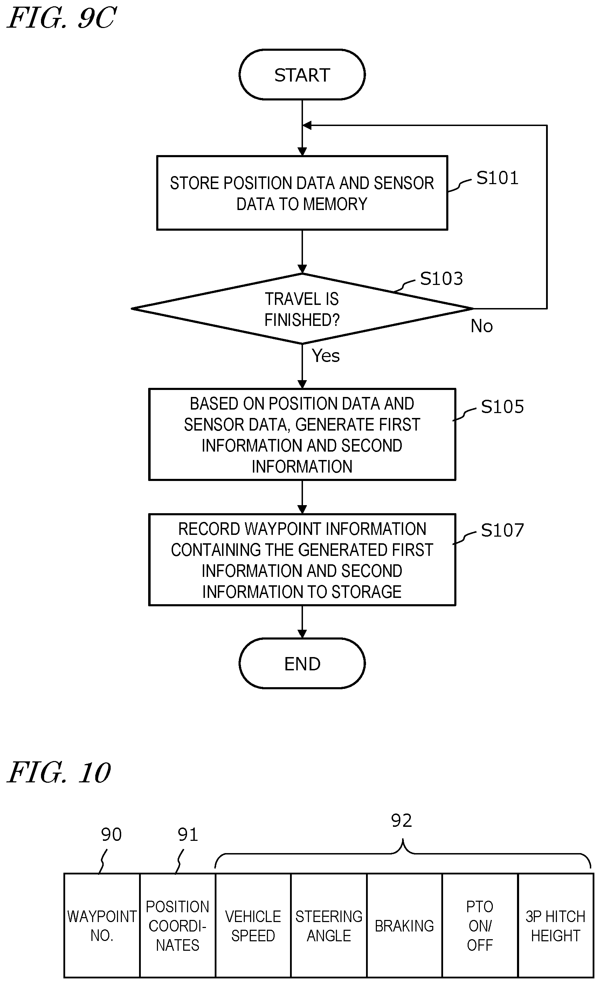

FIG. **10** is a diagram showing an example of waypoint information. The waypoint information depicted in FIG. **10** includes a waypoint number (No.) **90,** first information **91** indicating the position of the work vehicle **100,** and second information **92** indicating the state of the work vehicle **100.** The first information **91** represents the position coordinates of that waypoint. For example, the position coordinates may indicate a latitude and a longitude in a geographic coordinate system, or indicate position coordinates in a coordinate system other than a geographic coordinate system. In addition to a latitude and a longitude, the position coordinates may include altitude information. The second information **92** in the example of FIG. **10** includes information as to a vehicle speed, a steering angle, whether braking is applied or not, ON/OFF of the PTO shaft, and the height of the 3P hitch. The second information **92** may include only a portion of such information. Alternatively, the second information **92** may include other information not shown in FIG. **10****.** For example, information indicating the state of a forward/reverse lever may be included in the second information **92.** Alternatively, ON/OFF information on a front wheel speed increasing function (also referred to as "bi-speed turn") may be included in the second information **92.**

Until an instruction to end the recording mode is given (step **S106),** the controller **180** repeats the processes of step **S102** and step **S104.** The timing of ending the recording mode may be designated by the user. For example, the controller **180** may end the recording mode when a signal including an instruction to end the recording mode is transmitted to the controller **180** through an operation of the driver. For instance, the driver on the work vehicle **100** can transmit a signal including an instruction to end the recording mode to the controller **180** by operating an input device such as the operation terminal **200** or a predetermined operation switch provided in the work vehicle **100.**

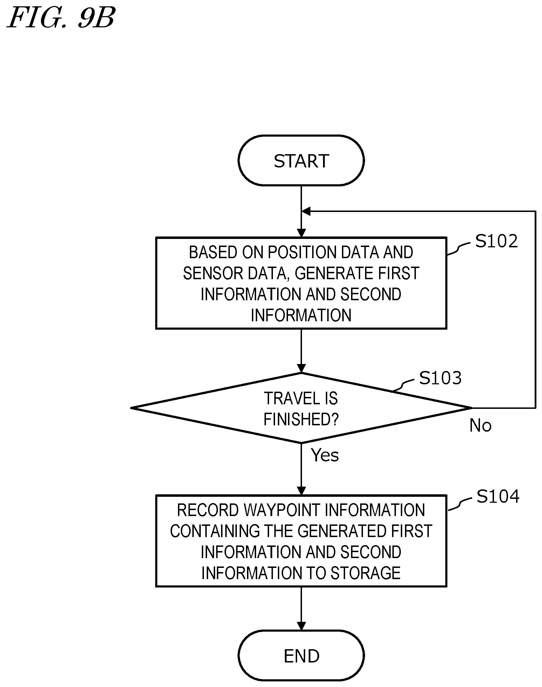

FIG. **9B** is a flowchart showing another example processing to be performed by the controller **180** in the recording mode. The flowchart of FIG. **9B** differs from the flowchart of FIG. **9A** in that step **S104** is performed at a timing that is after the travel in the recording mode is finished.

In the example shown in FIG. **9B**, after the travel of the work vehicle **100** in the recording mode is finished (step **S103**), the controller **180** performs the process of step **S104.** At step **S104,** multiple pieces of waypoint information including the first information and second information generated during travel of the work vehicle **100** in step **S102** are recorded to the storage device **870.** The first information and second information generated in step **S102** may be temporarily stored to the storage device **870** or a storage device (e.g., a memory such as the RAM **285** shown in FIG. **3B**) distinct from the storage device **870,** and erased after the waypoint information has been recorded. In this example, after the travel in the recording mode is finished, waypoint information as shown in FIG. **10** is generated for each waypoint, and recorded.

FIG. **9C** is a flowchart showing still another processing to be performed by the controller **180** in the recording mode. The flowchart shown in FIG. **9C** differs from the flowchart shown in FIG. **9B** in that the first information and the second information are generated after the travel in the recording mode is finished.

In the example shown in FIG. **9C****,** at step **S101**, while the work vehicle **100** is traveling, the controller **180** stores position data that is output from the positioning device **110** and sensor data that is output from the sensor group **150** to the memory (e.g., the RAM **285** shown in FIG. **3B**). After the travel of the work vehicle **100** in the recording mode is finished (step **S103**), the controller **180** performs the processes of steps **S105** and **S107**. At step **S105**, for each of multiple waypoints, the controller **180** generates first information and second information based on the position data and sensor data stored in the memory. At step **S107**, the controller **180** records multiple pieces of waypoint information, each including first information and second information, to the storage device **870.** In this example, after the travel in the recording mode is finished, first information and second information are generated for each waypoint, and waypoint information as shown in FIG. **10** is recorded for each waypoint.

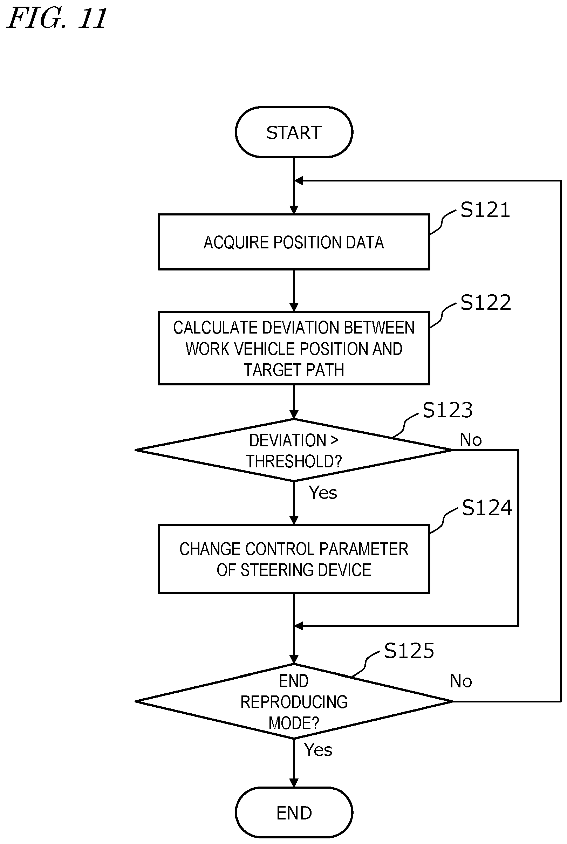

FIG. **11** is a flowchart showing an example processing to be performed in the reproducing mode.

In the reproducing mode, based on previously recorded waypoint information, the controller **180** causes the work vehicle **100** to automatically travel. The controller **180** acquires position data indicating the position of the work vehicle **100** that is output from the positioning device **110** (step **S121**). Next, the controller **180** calculates a deviation between the position of the work vehicle **100** and a target path (step **S122**). The target path is defined by positional information (first information) of multiple waypoints that are recorded in the recording mode. The deviation represents a distance between the position of the work vehicle **100** at that moment and the target path. The controller **180** determines whether the calculated deviation in position exceeds a previously-set threshold or not (step **S123**). If the deviation exceeds the threshold ("Yes" from step **S123**), the controller **180** changes a control parameter of the steering device **106** included in the driver **240** so that the deviation becomes smaller, thus changing the steering angle (step **S124).** If step **S123** finds that the deviation does not exceed the threshold ("No" from step **S123**), the process of step **S124** is not performed. Until an instruction to end the reproducing mode is given (step **S125**), the controller **180** repeats the operation from step **S121** to step **S124.**

In the reproducing mode, by performing the process shown in FIG. **11**, for example, the controller **180** causes the work vehicle **100** to perform self-traveling along the target path. Furthermore, based on the state information (second information) corresponding to each of the multiple waypoints defining the target path, the controller **180** controls the operation of the work vehicle **100.** For example, if the second information includes information on the steering angle of the wheels responsible to steer the work vehicle **100,** in addition to the processing shown in FIG. **11**, a control of the steering of the work vehicle **100** is performed based on the steering angle included in the second information. If the second information includes information on the speed of the work vehicle **100,** the speed of the work vehicle **100** is controlled based on the information on speed included in the second information. Further alternatively, if an operation has been recorded such that rotation of the PTO shaft is stopped (OFF) before beginning a turn and rotation of the PTO shaft is started (ON) after completion of the turn, then the controller **180** reproduces that operation at a turn of the work vehicle **100** in the reproducing mode.

For the steering control and speed control of the work vehicle **100,** control techniques such as PID control or MPC control (model predictive control) may applied. By applying such control techniques, the control of bringing the work vehicle **100** closer to a target path and a target speed can be made smooth.

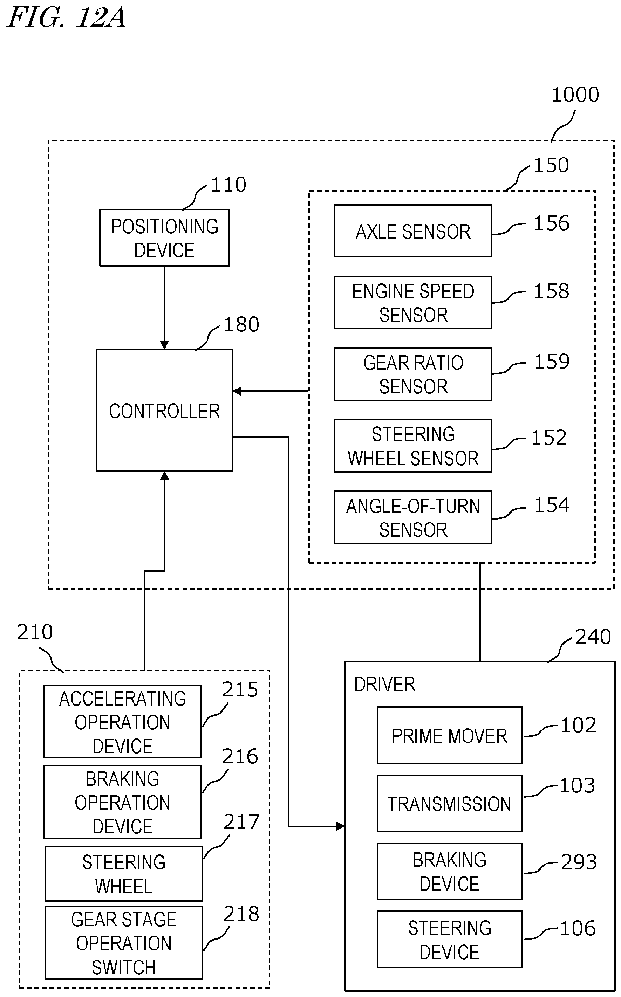

With reference to FIG. **12A**, an example processing to be performed by the controller **180** in a case where the second information includes information concerning the traveling state of the work vehicle **100** will be described. FIG. **12A** is a schematic diagram for describing an example processing to be performed by the controller **180** of the travel control system **1000.** In addition to the travel control system **1000**, FIG. **12A** also shows the driver **240** and the operation switches **210.** For simplicity, some component elements are omitted from illustration in FIG. **12A**.

By controlling the prime mover **102,** the braking device (brakes) **293,** and the transmission **103** included in the driver **240,** the controller **180** controls the speed of the work vehicle **100.** The braking device **293** applies braking to the axle that rotates the wheels **104** of the work vehicle **100.** Specifically, by controlling the engine speed of the prime mover (engine) **102** and/or the gear ratio of the transmission **103,** the speed of the work vehicle **100** can be controlled. For example, the transmission **103** has multiple gear stages, and the controller **180** controls the gear ratio of the transmission **103** by switching the gear stages of the transmission **103.** The multiple gear stages of the transmission **103** may be configured by a combination of multiple main gear stages and multiple range gear stages. When the work vehicle **100** is performing manual traveling, the controller **180** controls the speed of the work vehicle **100** by controlling the prime mover **102,** the braking device (brakes) **293,** and the transmission **103** in response to the driver's operation of an accelerating operation device **215** (e.g., an accelerator lever or an accelerator pedal), a braking operation device **216** (e.g., a brake pedal), and/or a gear stage operation switch **218** (e.g., a shift lever). The gear stage operation switch **218** is a switch to select a gear stage of the transmission **103.** The controller **180** may further switch between a two-wheel drive mode and a four-wheel drive mode in response to the driver's operation.

In the recording mode, the controller **180** consecutively acquires sensor data that is output from vehicle speed sensors such as the axle sensor **156,** an engine speed sensor **158,** and a gear ratio sensor **159** that detects information on the gear ratio of the transmission **103.** Based on such sensor data, as second information, the controller **180** generates and records information on the speed of the work vehicle **100,** information on the engine speed of the work vehicle **100,** and information on the gear ratio of the transmission **103,** in association with the positional information (first information) of each waypoint. In such a case, in the reproducing mode, the controller **180** controls the speed of the work vehicle **100** by controlling the prime mover **102,** the transmission **103,** and the braking device **293** included in the driver **240** based on the second information that was recorded in the recording mode. The gear ratio sensor **159** may be a sensor which is provided on a rotation axis within the transmission **103** and which detects the gear ratio, or a shift position sensor that detects the position of the shift lever (gear stage operation switch **218**) for selecting a gear stage to identify the selected gear stage. Without being limited to information that indicates the gear ratio itself, information on the gear ratio of the transmission **103** may be information that identifies a selected gear stage among the plurality of gear stages of the transmission **103,** for example. Since one gear stage corresponds to one gear ratio, identifying a gear stage allows the gear ratio to be identified.

The work vehicle **100** may have a bi-speed turn function (front wheel speed increasing function). A bi-speed turn is an operation in which, when a driver steers the steering wheel so much that the steering angle of the front wheels exceeds a threshold, the speed of the front wheels is increased. Performing a bi-speed turn allows the turning radius to be decreased, thus resulting in a smoother turn. The work vehicle **100** may include a solenoid (referred to as a "bi-speed solenoid") for driving a clutch that switches the bi-speed turn function ON/OFF. The controller **180** can switch the bi-speed solenoid ON/OFF via a hydraulic circuit. When the bi-speed solenoid is ON, the rotational speed of the front wheels is about twice that of the case where the bi-speed solenoid is OFF.

The second information may further include information concerning the traveling mode of the work vehicle **100.** For example, information concerning the traveling mode of the work vehicle **100** may include information as to forward travel or backward travel. Information concerning the traveling mode may include information as to whether the traveling mode of the work vehicle **100** is in a four-wheel drive mode or a two-wheel drive mode. Information concerning the traveling mode may include information as to whether the bi-speed turn function is ON or OFF. Information concerning the traveling mode may further include information as to whether an automatic single brake mode is ON or OFF. The automatic single brake mode is a mode which, when ON, applies slight braking to the inner rear wheels when the steering angle of the front wheels **104F** (which are the wheels responsible for steering) exceeds a predetermined value during travel. In the reproducing mode, the controller **180** controls the traveling mode of the work vehicle **100,** by controlling the prime mover **102,** the transmission **103,** and the braking device **293** included in the driver **240** based on the second information that was recorded in the recording mode.

The controller **180** changes the steering angle of the front wheels **104F** (which are the wheels responsible for steering of the work vehicle **100**) by controlling the steering device **106,** and changes the azimuth of the work vehicle **100** by changing the steering angle of the wheels responsible for steering. When the work vehicle **100** is performing manual traveling, the controller **180** changes the steering angle of the wheels responsible for steering and the azimuth of the work vehicle **100** of the work vehicle **100** by controlling the steering device **106** in response to the driver's operation of the steering wheel **217.**

In the recording mode, based on sensor data (measurement values) that is output from the steering wheel sensor **152** and/or the angle-of-turn sensor **154**, the controller **180** acquires, as second information, information on the steering angle of the wheels responsible for steering of the work vehicle **100.** In such a case, in the reproducing mode, the controller **180** controls steering of the work vehicle **100** by controlling the hydraulic device or the electric motor included in the steering device **106** based on the second information that was recorded in the recording mode.

The second information may further include information concerning the attitude of the work vehicle **100.** The attitude of the work vehicle **100** is represented by a roll angle θ_{R}, a pitch angle θ_{P}, and a yaw angle θ_{Y}, for example. A roll angle θ_{R} represents the amount of rotation of the work vehicle **100** around its front-rear axis. A pitch angle θ_{P} represents the amount of rotation of the work vehicle **100** around its right-left axis. A yaw angle θ_{Y} represents the amount of rotation of the work vehicle **100** around its top-bottom axis. The attitude may be defined by an Euler angle or other angles, or a quaternion. The controller **180** acquires information concerning the attitude of the work vehicle **100** based on data that is output from the IMU **115,** for example.

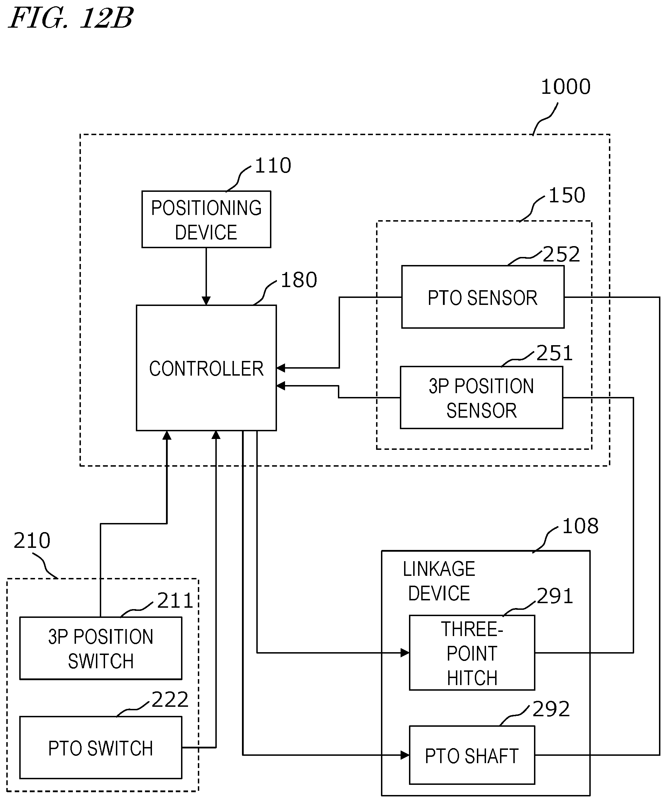

With reference to FIG. **12B****,** an example processing to be performed by the controller **180** in a case where the second information includes information concerning the state of the linkage device **108** for enabling linking of the implement **300** will be described. FIG. **12B** is a schematic diagram for describing an example processing to be performed by the controller **180** of the travel control system **1000**. In addition to the travel control system **1000**, FIG. **12B** also shows the linkage device **108** and the operation switches **210**.

As shown in FIG. **12B**, the linkage device **108** includes a three-point hitch **291** to connect the implement **300**, and a PTO shaft **292** for supplying motive power of rotation to the implement **300.** The operation switches **210** include a 3P position switch **211** to perform an operation of changing the height of the three-point hitch **291**, and a PTO switch **222** to perform an operation of switching ON/OFF the rotation of the PTO shaft **292.** The sensor group **150** includes a 3P position sensor **251** to detect the position in the height direction of the three-point hitch **291**, and a PTO sensor **252** to detect rotation ON/OFF of the PTO shaft **292.** Each of the linkage device **108**, the operation switches **210,** and the sensor group **150** may include other component elements. However, for simplicity, some component elements are omitted from illustration in FIG. **12B**. The controller **180** is connected to the 3P position sensor **251**, the PTO sensor **252**, the three-point hitch **291**, and the PTO shaft **292.** The controller **180** is capable of performing communications between itself and these component elements by utilizing a communication protocol such as CAN.

The controller **180** controls the height of the three-point hitch **291** and switching ON/OFF of the rotation of the PTO shaft **292.** In a case where the work vehicle **100** is operating via manual operation of the driver, the controller **180** changes the height of the three-point hitch **291** in response to the driver's operation of the 3P position switch **211,** and switches rotation ON/OFF of the PTO shaft **292** in response to the driver's operation of the PTO switch **222.**

In the recording mode, based on sensor data that is output from the **3P** position sensor **251,** the controller **180** generates, as second information, information concerning the height of the three-point hitch **291.** In such a case, in the reproducing mode, the controller **180** controls the height of the three-point hitch **291** based on the second information that was recorded in the recording mode. Moreover, in the recording mode, the controller **180** acquires, as second information, information concerning rotation ON/OFF of the PTO shaft **292** based on sensor data that is output from the PTO sensor **252.** In such a case, in the reproducing mode, the controller **180** controls rotation ON/OFF of the PTO shaft **292** based on the second information that was recorded in the recording mode.

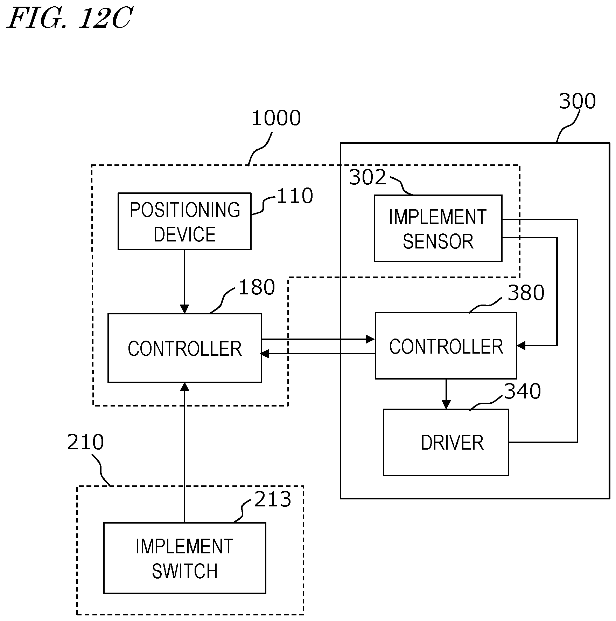

With reference to FIG. **12C****,** an example processing to be performed by the controller **180** in a case where the work vehicle **100** has the implement **300** linked thereto and the second information includes information concerning the state of the implement **300** will be described. FIG. **12C** is a schematic diagram for describing an example processing to be performed by the controller **180** of the travel control system **1000.** In addition to the travel control system **1000**, FIG. **12C** also shows the implement **300** and the operation switches **210.** For simplicity, some component elements are omitted from illustration in FIG. **12C****.**

As shown in FIG. **12C****,** the implement **300** includes the driver **340** to perform necessary operations for the implement **300** to perform predetermined tasks, the controller **380** to control the operation of the driver **340,** and one or more implement sensors **302** to detect the state of the driver **340** and output sensor data. The driver **340** includes a device that is adapted to the use of the implement **300,** such as a hydraulic device, an electric motor, or a pump, for example. The implement sensor **302** has a structure that is adapted to the driver **340,** and includes a hydraulic sensor, for example. The operation switches **210** include an implement switch **213** to operate the operation of the implement **300.**

By sending a command to control the operation of the driver **340** to the controller **380,** the controller **180** controls the operation of the implement **300.** In a case where the work vehicle **100** is operating via manual operation of the driver, the controller **180** controls the operation of the implement **300** by sending a command to the controller **380** to control the operation of the driver **340,** in response to the driver's operation of the implement switch **213.**

In the recording mode, the controller **180** acquires or generates, as second information, information concerning the state of the implement **300,** based on sensor data that is output from the implement sensor **302.** For example, the controller **380** may generate second information concerning the state of the implement **300** based on sensor data that is output from the implement sensor **302,** and transmit the second information to the controller **180.** Alternatively, the controller **180** may receive sensor data that is output from the implement sensor **302** via the controller **380,** and generate information concerning the state of the implement **300.** In such a case, in the reproducing mode, the controller **180** controls the operation of the implement **300** by causing the controller **380** to control the operation of the driver **340** based on the second information that was recorded in the recording mode.

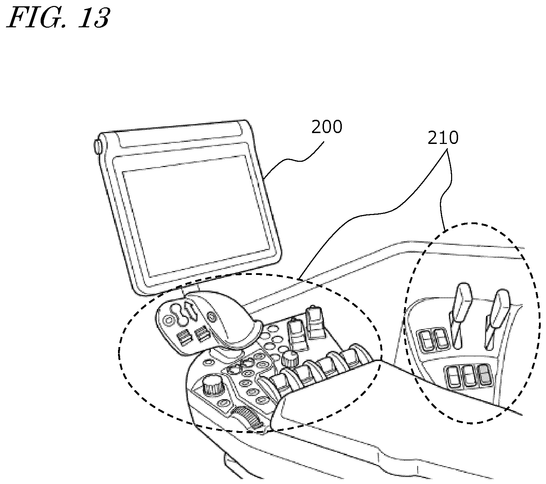

FIG. **13** is a diagram showing an example of an operation terminal **200** and operation switches **210** provided inside the cabin **105** of the work vehicle **100.** Inside the cabin **105,** operation switches **210** including a plurality of switches that can be operated by the driver are provided. The operation switches **210** may include examples of operation switches that have been described with reference to FIG. **12A**, FIG. **12B**, and FIG. **12C****.**

Next, an example of an obstacle avoidance operation that may be performed while the work vehicle **100is** traveling in the reproducing (playback) mode will be described.

In the reproducing mode, the work vehicle **100** is controlled to automatically travel along a target path that is defined by positional information on multiple waypoints that were recorded (taught) in the recording mode. However, there may be cases where the work vehicle **100** significantly deviates from the target path without being able to completely reproduce the target path. In that case, the work vehicle **100** may collide against a tree or other obstacles. Factors that may hinder complete reproduction of a target path may include the following, for example.
- positioning errors during teaching
- positioning errors during playback
- errors of tracking control during playback, e.g., PID control or MPC control
- diversity in the state of the ground surface (slipperiness, etc.)

Regarding positioning errors, for example, even in cases where the positioning device **110** is capable of highly accurate positioning, e.g., RTK-GNSS, errors on the order of several centimeters (e.g., about 3 cm) may occur both during teaching and during playback. Furthermore, due to various factors such as errors of tracking control during playback and changes in the ground surface state, the traveling locus of the work vehicle **100** during playback may significantly deviate from the target path. In that case, collisions may occur between obstacles (e.g., trees) and the work vehicle **100.** In particular, a collision with a tree is likely to occur when the work vehicle **100** finishes a turn and goes into a path between rows of trees.

In order to avoid such collisions, in the reproducing mode, if an obstacle is detected while the work vehicle **100** is traveling along a target path (hereinafter also referred to as "playback travel") such that collision with the obstacle is expected ahead, the controller **180** in the present example embodiment performs an avoidance operation for avoiding that obstacle. Specifically, the controller **180** generates a local path for avoiding the detected obstacle (hereinafter referred to as an "avoidance path"), and causes the work vehicle **100** to travel along the avoidance path. The avoidance path is generated so that the work vehicle **100** will avoid the obstacle and move toward a specific point on the target path (hereinafter referred to as a "target point"). Once arriving at the specific point, the work vehicle **100** restarts the playback travel.

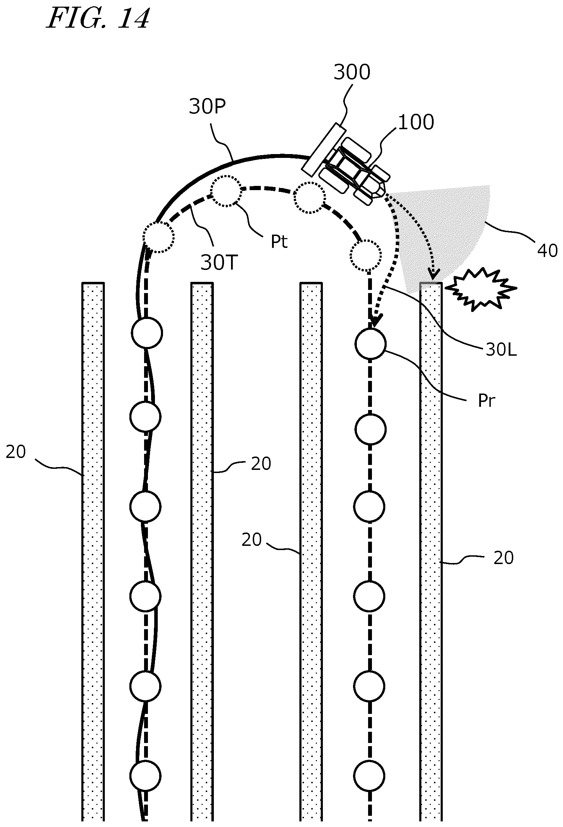

FIG. **14** is a diagram for describing an obstacle avoidance operation in the reproducing mode. In this example, the work vehicle **100** travels along a path including a plurality of main paths that extend parallel or substantially parallel to a plurality of rows of trees **20** (i.e., crop rows) and a plurality of turning paths that interconnect the plurality of main paths. A main path is linear path that is located between two adjacent rows of trees 20. Although main paths are illustrated as linear paths in the example shown in FIG. **14****,** they may be curved. A turning path is a curved path interconnecting two adjacent main paths. In the example of FIG. **14****,** after traveling along one main path, the work vehicle **100** turns and, rather than the next main path, follows along the second next main path. Thus, teaching may be performed for the work vehicle **100** so that the work vehicle **100** having traveled along a given main path will turn and go into the second (or subsequent) next main path.

FIG. **14** schematically illustrates a state where, in the reproducing mode, the work vehicle **100** is traveling along a path **30P** that is deviated from the target path **30T** during a turn, such that the work vehicle **100** is about to collide against an obstacle, i.e., a row of trees **20.** A sector-shaped region **40** in FIG. **14** shows a range of sensing by an obstacle sensor that is mounted on the work vehicle **100.** Herein, the obstacle sensor may be an obstacle sensor **130** shown in FIG. **2**, for example, but is not limited thereto. For instance, a LiDAR sensor **140** or a camera **120** may be used as the "obstacle sensor". Without being limited to a single sensor, the obstacle sensor may be a combination of multiple sensors. For example, a combination of a LiDAR sensor **140** and a camera **120** may be used as an "obstacle sensor". The obstacle sensor may output data for detecting an obstacle, and the controller **180** may perform a process of obstacle detection based on that data. In the sense that it outputs data for use in obstacle detection, such a sensor also qualifies as an "obstacle sensor to detect an obstacle".

As shown in FIG. **14****,** while the work vehicle **100** is performing playback travel, an obstacle (which in this example if a row of trees **20**) may be detected by the obstacle sensor, such that collision with the obstacle is expected ahead. In such a case, the controller **180** generates an avoidance path **30L** that avoids the obstacle, and performs steering control so that the work vehicle **100** will travel along the avoidance path **30L.** In other words, upon detecting the possibility that the work vehicle **100** may collide against an obstacle, the controller **180** suspends control of the playback travel, and causes the work vehicle **100** to travel along the avoidance path **30L**.

As an algorithm for generating the avoidance path **30L**, for example, any arbitrary local path generation algorithm, such as Hybrid A* or Dynamic Window Approach (DWA), may be used. When any such algorithm is utilized, it is necessary to designate the position of a target point in the avoidance path **30L.** Based on data that is output from an external sensor such as the LiDAR sensors **140** or the cameras **120**, the controller **180** may be configured or programmed to create a map representation of the surrounding environment of the work vehicle **100,** and, through spatial exploration, determine the avoidance path **30L** extending from the current position of the work vehicle **100** to the target point. In the present example embodiment, one of the multiple waypoints **Pr** that were recorded during teaching is designated as the target point. More specifically, based on the second information (i.e., information concerning the state of the work vehicle **100** or the implement **300**) included in the multiple pieces of waypoint information that were recorded during teaching, the controller **180** determines a specific waypoint **Pr** as the target point in the avoidance path **30L.** For example, based on the second information, the controller **180** may determine as the target point a waypoint **Pr** at which the task by the implement **300** is to be restarted after a turn. In FIG. **14****,** multiple waypoints **Pr** at which travel with work (tasked travel) is to be performed are depicted by solid circles, whereas multiple waypoints **Pt** at which a turning travel (which does not involve any work) is to be performed are depicted by dotted circles.

Thus, in the reproducing mode, when an obstacle is detected by the obstacle sensor while the work vehicle **100** is traveling along one of a plurality of turning paths, the controller **180** is configured or programmed to control travel of the work vehicle to avoid the obstacle and move toward a specific point on a main path to be traveled next among a plurality of main paths. The controller **180** determines the specific point based on the second information included in the multiple pieces of waypoint information. As a result, when an obstacle is detected during a turn, the work vehicle **100** is controlled to avoid the obstacle, and smoothly travel to the next main path to be traveled.

Hereinafter, several example methods of determining a target point in the avoidance path **30L** (i.e., specific point) will be described.

The second information may include information indicating ON or OFF of rotation of the PTO shaft that transmits motive power to the implement **300.** In that case, based on the second information, the controller **180** may determine as the target point a point at which rotation of the PTO shaft is ON. For example, based on the second information, the controller **180** may determine a point at which rotation of the PTO shaft switches from OFF to ON as the target point. Rotation of the PTO shaft becomes OFF during a turn, and again becomes ON after completion of the turn. By determining as the target point a point at which rotation of the PTO shaft switches from OFF to ON, or a point close to that, the avoidance path **30L** can be smoothly connected to a main path at which the tasked travel is to be next restarted after a turn.

The second information may include information on the height of a three-point hitch to adjust the height of the implement **300.** In that case, based on the second information, the controller **180** may determine as the target point a point at which the height of the implement **300** is a height during work. For example, based on the second information, the controller **180** may determine a point at which the height of the implement **300** switches from a height during non-work (i.e., relatively high) to a height during work (i.e., relatively low) as the target point. With this method, the avoidance path **30L** can be smoothly connected to a main path at which the tasked travel is to be next restarted after a turn.

The second information may include information the a velocity or acceleration of the work vehicle **100.** In that case, based on the second information, the controller **180** may determine as the specific point a point at which the magnitude of acceleration of the work vehicle **100** exceeds a threshold. The speed of the work vehicle **100** often differs between during a turn and during tasked travel. By determining as the target point a point at which the speed undergoes a large change, i.e., a point at which the magnitude of acceleration of (absolute value) exceeds a predesignated threshold, the avoidance path **30L** can be smoothly connected to a main path at which the tasked travel is to be next restarted after a turn. Alternatively, based on the second information, the controller **180** may determine as the target point a point at which the speed of the work vehicle **100** fits within a predesignated speed range during tasked travel.

As mentioned earlier, the work vehicle **100** may have a front wheel speed increasing function (bi-speed turn function) of increasing the front wheels in speed during a turn. The second information may include information indicating ON or OFF of the bi-speed turn function. In that case, based on the second information, the controller **180** may determine a point at which the bi-speed turn function switches from OFF to ON as the target point. As a result, the avoidance path **30L** can be smoothly connected to a main path at which the tasked travel is to be next restarted after a turn that involves bi-speed turning is finished.

As mentioned earlier, the work vehicle **100** may have a single brake function of braking on the inner rear wheel during a turn. An example of the single brake function is an AD (automatic disc brakes) bi-speed function in which, when the steering angle of the front wheels has exceeded a predetermined value, the front wheels are increased in speed while also braking on the inner rear wheel. The second information may include information indicating ON or OFF of the single brake function. In that case, based on the second information, the controller **180** may determine a point at which single brake function switches from OFF to ON as the specific point. As a result, the avoidance path **30L** can be smoothly connected to a main path at which the tasked travel is to be next restarted after a turn that involves single braking is finished.

As another example, when the second information includes information indicating ON or OFF of a specific function of the implement **300,** based on the second information, the controller **180** may determine a point at which that function of the implement **300** switches from OFF to ON as the target point. In case where the implement **300** is a sprayer, for example, based on the second information, the controller **180** may determine a point at which the spraying function switches from OFF to ON as the target point.

Once the target point is determined, the controller **180** generates an avoidance path **30L** from the current position of the work vehicle **100** to the target point, and performs steering control so that the work vehicle **100** will travel along the avoidance path **30L.** When the work vehicle **100** arrives at a waypoint **Pr** that is the target point, the controller **180** restarts playback travel along the target path having been taught. Thereafter, a similar operation may be performed each time a turning operation is performed.

When performing the aforementioned operation, the controller **180** may recognize whether an obstacle that is detected by the obstacle sensor is a tree or not, and perform different controls depending on whether the obstacle is a tree or not. For example, the controller **180** may control travel of the work vehicle **100** to avoid the obstacle and move toward the target point if the obstacle is a tree, and halt the work vehicle **100** if the obstacle is not a tree. As a result, contact between the work vehicle **100** and the obstacle can be avoided in the case where a movable entity (e.g., a person, an animal, or another vehicle) is detected as an obstacle rather than a stationary entity (e.g. a tree). When the obstacle sensor is a camera **120,** for example, the determination as to whether the obstacle is a tree or not can be made through a recognition process based on image data that is output from the camera **120.** Alternatively, when the obstacle sensor is a LiDAR sensor **140,** the determination as to whether the obstacle is a tree or not can be made through a recognition process based on point cloud data that is output from the LiDAR sensor **140.** The algorithm to be used for such recognition is not limited to any particular algorithm, but any arbitrary Image recognition algorithms or point cloud recognition algorithms can be used. For the recognition, an algorithm based on machine learning, such as deep learning, may be used.

The aforementioned obstacle avoidance operation is performed during a turn of the work vehicle **100.** On the other hand, if an obstacle is detected while the work vehicle **100** is performing playback travel along a main path between two adjacent rows of trees **20,** the controller **180** may halt the work vehicle **100,** instead of performing an obstacle avoidance operation. In other words, if an obstacle is detected by the obstacle sensor while the work vehicle **100** is traveling along one of the plurality of main paths in the reproducing mode, the controller **180** may halt the work vehicle **100.** The reason is that often a passage between two adjacent rows of trees **20** is narrow, leaving little space for avoiding obstacles. However, while the work vehicle **100** is traveling along an endmost main path among the plurality of main paths, for example, there may be sufficient space for avoiding obstacles because of there being only one row of trees **20.** In such a case, the controller **180** may perform an obstacle avoidance operation similar to that in the case of a turn.

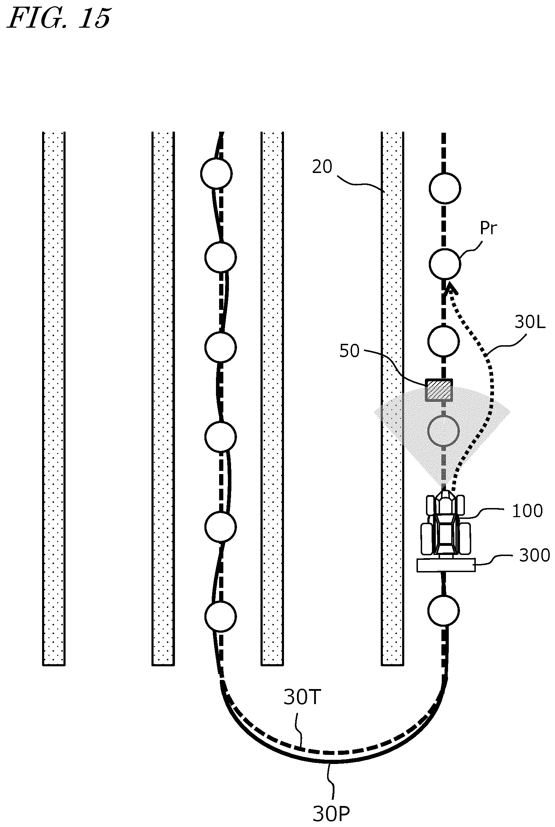

FIG. **15** is a diagram schematically showing a situation where, in the reproducing mode, an obstacle **50** is detected by the obstacle sensor while the work vehicle **100** is traveling along an endmost main path among the plurality of main paths. In such a case, the controller **180** may stop the task by the implement **300,** generate an avoidance path **30L** of avoiding the obstacle **50** and going toward a point (a certain waypoint **Pr**) on the main path, and cause the work vehicle **100** to travel along the avoidance path **30L.** Thereafter, the controller **180** may restart tasked travel from that waypoint **Pr.** In this case, an unworked section(s) may occur because of performing the operation of avoiding the obstacle **50.** In the example shown in FIG. **15****,** for example, work is not performed in the section between the start point of the avoidance path **30L** and the waypoint **Pr** that is the end point of the avoidance path **30L.** In such a case, the controller **180** may record information identifying the unworked section to the storage device **870.** The information identifying the unworked section may be information indicating positions of a start point and an end point of the avoidance path **30L,** for example. By performing such recording, it is possible for the user to confirm the unworked sections retrospectively, and address this problem by reworking that section alone.

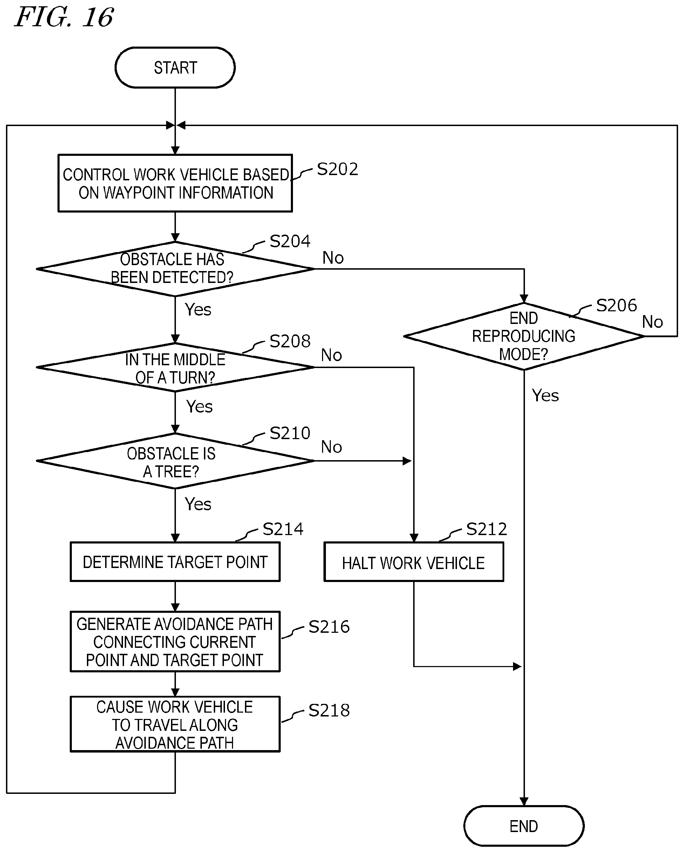

FIG. **16** is a flowchart showing an example of the obstacle avoidance operation in the reproducing mode. The operation shown in FIG. **16** is begun when the user moves the work vehicle **100** to near the first waypoint and perform an operation to begin the reproducing mode.

At step **S202**, the controller **180** is configured or programmed to control the work vehicle **100** based on the waypoint information that was recorded in the recording mode. As a result, the work vehicle **100** travels along a target path that is defined by multiple waypoints. While the work vehicle **100** is traveling along a main path between two adjacent crop rows, the controller **180** keeps the PTO shaft ON, maintains the three-point link at a low position, and causes the implement **300** to perform a specific task of agricultural work. On the other hand, when the work vehicle **100** is turning, the controller **180** turns the PTO shaft OFF, raises three-point link, and stops the task by the implement **300.** During a turn, the controller **180** may enable the bi-speed turn function or enable the single brake function, thereby reducing the turning radius. All such operations are controlled based on the second information included in the waypoint information. During travel of the work vehicle **100,** obstacle detection by the obstacle sensor is performed.

At step **S204**, based on signals that are output from the obstacle sensor, the controller **180** determines whether an obstacle has been detected or not. If no obstacle has been detected, the process proceeds to step **S206**. If an obstacle is detected, the process proceeds to step **S208**.

At step **S206**, the controller **180** determines whether an instruction to end the reproducing mode has been given or not. If an instruction to end the reproducing mode has been given, the process is ended. If an instruction to end the reproducing mode has not been given, the process returns to step **S202** and playback travel is continued.

At step **S208**, the controller **180** determines whether the work vehicle **100** is in the middle of a turn or not. For example, based on the second information included in the waypoint information, the controller **180** can determine whether the work vehicle **100** is in the middle of a turn or not. Specifically, the determination of being in the middle of a turn can be made based on at least one type of information included in the second information that is selected from among steering angle, speed, information indicating ON or OFF of rotation of the PTO shaft, information indicating the height of the three-point link, information indicating ON or OFF of the bi-speed turn function, information indicating ON or OFF of the single brake function, and information indicating ON or OFF of a function concerning work of the implement **300.** If it is determined that the work vehicle **100** is in the middle of a turn, control proceeds to step **S210**. If it is determined that the work vehicle **100** is not in the middle of a turn, control proceeds to step **S212**.

At step **S210**, the controller **180** determines whether the detected obstacle is a tree or not. As mentioned earlier, the determination may be performed through a recognition process based on data that is output from the cameras **120** or the LiDAR sensors **140.** If the obstacle is a tree, the process proceeds to step **S214**. If the obstacle is not a tree, the process proceeds to step **S212**.

At step **S212**, the controller **180** halts the work vehicle **100.** As used herein, to "halt" the work vehicle **100** means stopping the travel of the work vehicle **100.** Functions of the work vehicle **100** other than traveling do not need to be stopped. In the case where the detected obstacle is not a tree, it is likely that the obstacle is an irregular obstacle that is not expected to exist in that place. For example, if a movable entity such as a person, an animal, another vehicle may be the obstacle. In such a case, without performing an avoidance operation, collision between the work vehicle **100** and the obstacle can be better avoided by halting the work vehicle **100.** After halting the work vehicle **100**, the controller **180** may send a notification to an external computer. For example, the controller **180** may send a notification to a terminal device being used by the user. Sending such a notification allows the user to know the presence of the obstacle, and can prompt the user to remove the obstacle or perform an operation to restart playback travel.

At step **S214**, the controller **180** suspends playback travel, and determine a target point in the avoidance path for avoiding the obstacle, i.e., a tree. As described above, the target point is determined based on the second information included in the waypoint information. For example, the controller **180** can determine the target point based on at least one type of information included in the second information that is selected from among steering angle, speed, information indicating ON or OFF of rotation of the PTO shaft, information indicating the height of the three-point link, information indicating ON or OFF of the bi-speed turn function, information indicating ON or OFF of the single brake function, and information indicating ON or OFF of a function concerning work of the implement **300.** Specifically, as the target point, the controller **180** may set a waypoint that satisfies at least one of the following conditions: waypoints associated with steering angles below a threshold, waypoints associated withed with speeds within a predetermined range, waypoints at which the magnitude of acceleration of exceeds a threshold; waypoints at which rotation of the PTO shaft switches from OFF to ON, waypoints at which the height of the three-point link switches from a height during a turn to a height during work, waypoints at which the bi-speed turn function switches from ON to OFF, and waypoints at which the single brake function switches from ON to OFF. After step **S214**, the process proceeds to step **S216**.

At step **S216**, the controller **180** generates an avoidance path connecting the current point of the work vehicle **100** and the target point. Specifically, the controller **180** generates avoidance path data including the position coordinates of multiple points (waypoints) defining the avoidance path, and stores it to the memory. The controller **180** can generate the avoidance path by using any arbitrary local path generation algorithm, such as Hybrid A* or Dynamic Window Approach (DWA), for example. After step **S216**, the process proceeds to step **S218**.

At step **S218**, the controller **180** is configured or programmed to cause the work vehicle **100** to travel along the avoidance path. Specifically, the controller **180** is configured or programmed to control steering and speed of the work vehicle **100** so that the multiple waypoints defining the avoidance path will be traveled through. As a result, the controller **180** allows the work vehicle **100** to move to the target point without colliding against the tree. This allows the work vehicle **100** to arrive at the specific point (waypoint) on the main path to be next traveled. After step **S218** is completed, the process returns to step **S202** and playback travel is restarted.

Through the above operation, even if the work vehicle **100** deviates from the target path having been taught during a turn, collision of the work vehicle **100** into the tree is avoided, and the intended path is restored in order to continue playback travel.

Although the example of FIG. **16** illustrates that the avoidance operation is performed only when a tree is detected as an obstacle during a turn of the work vehicle **100,** a similar avoidance operation may be performed even when anything other than a tree is detected as an obstacle. For example, step **S210** may be omitted, and an avoidance operation may be performed regardless of the type of the obstacle. If the obstacle is a movable entity such as a person, an animal, or a vehicle, during the avoidance operation, the controller **180** may detect the obstacle position based on data that is output from the cameras **120** or the LiDAR sensors **140**, and consecutively update the avoidance path so that the work vehicle **100** will not collide against the obstacle. Alternatively, it may be recognized if the obstacle is a stationary entity or a movable entity based on data that is output from the cameras **120** or the LiDAR sensors **140**, and an avoidance operation may be performed only if the obstacle is a stationary entity. Furthermore, as shown in FIG. **15**, an operation of avoiding the obstacle may be performed not only during a turn but also while the work vehicle **100** is traveling along an endmost main path.

Although the above example illustrates that the work vehicle **100** travels along a path between rows of trees, the work vehicle **100** may travel along a path between crop rows other than rows of trees. In that case, the controller **180** may be configured or programmed to perform the aforementioned avoidance operation when the detected obstacle is a crop of interest.

The travel control systems according to the above example embodiments may be mounted to a work vehicle lacking such functionality as an add-on. Such a control system may be manufactured and marketed independently from the work vehicle. A computer program for use in such a control system may also be manufactured and marketed independently from the work vehicle. The computer program may be provided in a form stored in a computer-readable, non-transitory storage medium, for example. The computer program may also be provided through downloading via telecommunication lines (e.g., the Internet).

Example embodiments according to the present disclosure are broadly applicable to various kinds of work vehicles for use in smart agriculture.

While example embodiments of the present invention have been described above, it is to be understood that variations and modifications will be apparent to those skilled in the art without departing from the scope and spirit of the present invention. The scope of the present invention, therefore, is to be determined solely by the following claims.

## Claims

1. A travel control system for a work vehicle, comprising:
a positioning device to detect a position of the work vehicle and output position data;
one or more internal sensors to detect a state of the work vehicle and output sensor data;
an obstacle sensor to detect an obstacle around the work vehicle; and
a controller configured or programmed to:
control operation of the work vehicle;
operate in a recording mode and a reproducing mode;
in the recording mode, generate and record to a storage device multiple pieces of waypoint information based on the position data and the sensor data while the work vehicle is traveling, each of the multiple pieces of waypoint information including first information concerning the position of the work vehicle and second information concerning the state of the work vehicle; and
in the reproducing mode, control the operation of the work vehicle while causing the work vehicle to perform self-traveling based on the first information and the second information included in the multiple pieces of waypoint information recorded in the recording mode; wherein
a path traveled by the work vehicle in the recording mode includes a plurality of main paths that extend parallel or substantially parallel to a plurality of crop rows and a plurality of turning paths that interconnect the plurality of main paths; and
the controller is configured or programmed to:
in the reproducing mode, when an obstacle is detected by the obstacle sensor while the work vehicle is traveling along one of the plurality of turning paths, control travel of the work vehicle to avoid the obstacle and move toward a specific point on a main path to be traveled next among the plurality of main paths; and
determine the specific point based on the second information included in the multiple pieces of waypoint information.

2. The travel control system of claim 1, wherein
the work vehicle includes a PTO shaft to transmit motive power to an implement linked to the work vehicle;
the second information includes information indicating ON or OFF of rotation of the PTO shaft; and
the controller is configured or programmed to determine a point at which rotation of the PTO shaft is ON as the specific point, based on the second information.

3. The travel control system of claim 2, wherein the controller is configured or programmed to determine a point at which rotation of the PTO shaft switches from OFF to ON as the specific point, based on the second information.

4. The travel control system of any one of claims 1 to 3, wherein
the work vehicle includes a three-point hitch to adjust a height of an implement linked to the work vehicle;
the second information includes information on a height of the three-point hitch; and
the controller is configured or programmed to determine a point at which the height of the implement is a height during work as the specific point, based on the second information.

5. The travel control system of claim 4, wherein the controller is configured or programmed to determine a point at which the height of the implement switches from a height during non-work to a height during work as the specific point, based on the second information.

6. The travel control system of any one of claims 1 to 5, wherein
the second information includes information indicating a velocity or an acceleration of the work vehicle; and
the controller is configured or programmed to determine a point at which a magnitude of acceleration of the work vehicle exceeds a threshold as the specific point, based on the second information.

7. The travel control system of any one of claims 1 to 6, wherein
the work vehicle has a front wheel speed increasing function of increasing a front wheel in speed during a turn;
the second information includes information indicating ON or OFF of the front wheel speed increasing function; and
the controller is configured or programmed to determine a point at which the front wheel speed increasing function switches from OFF to ON as the specific point, based on the second information.

8. The travel control system of any one of claims 1 to 6, wherein:
the work vehicle has a single brake function of braking on an inner rear wheel during a turn;
the second information includes information indicating ON or OFF of the single brake function; and
the controller is configured or programmed to determine a point at which the single brake function switches from OFF to ON as the specific point, based on the second information.

9. The travel control system of any one of claims 1 to 8, wherein the controller is configured or programmed to, in the reproducing mode, halt the work vehicle when an obstacle is detected by the obstacle sensor while the work vehicle is traveling along one of the plurality of main paths.

10. The travel control system of claim 9, wherein the controller is configured or programmed to, in the reproducing mode, when an obstacle is detected by the obstacle sensor while the work vehicle is traveling along an endmost main path among the plurality of main paths:
stop work of the work vehicle;
control travel of the work vehicle to avoid the obstacle and move toward a point on the main path; and
restart tasked travel from the point on the main path.

11. The travel control system of claim 10, wherein the controller is configured or programmed to, when an unworked section has occurred because of performing an operation of avoiding the obstacle, record information identifying the unworked section to the storage device.

12. The travel control system of any one of claims 1 to 11, wherein:
the plurality of crop rows include rows of trees; and
the controller is configured or programmed to:
recognize whether an obstacle detected by the obstacle sensor is a tree or not;
control travel of the work vehicle to avoid the obstacle and move toward the specific point when the obstacle is recognized as a tree; and
halt the work vehicle when the obstacle is not recognized as a tree.

13. A work vehicle comprising:
the travel control system of any one of claims 1 to 12; and
a travel device.

14. A method of travel control to be performed by a controller to control operation of a work vehicle, the controller being configured or programmed to operate in a recording mode and a reproducing mode, the method comprising:
in the recording mode, generating and recording to a storage device multiple pieces of waypoint information based on position data acquired from a positioning device to detect a position of the work vehicle and sensor data acquired from one or more internal sensors to detect a state of the work vehicle while the work vehicle is traveling along a path including a plurality of main paths that extend parallel or substantially parallel to a plurality of crop rows and a plurality of turning paths that interconnect the plurality of main paths, each of the multiple pieces of waypoint information including first information concerning the position of the work vehicle and second information concerning the state of the work vehicle;
in the reproducing mode, controlling the operation of the work vehicle while causing the work vehicle to perform self-traveling based on the first information and the second information included in the multiple pieces of waypoint information recorded in the recording mode;
in the reproducing mode, when an obstacle is detected by an obstacle sensor mounted on the work vehicle while the work vehicle is traveling along one of the plurality of turning paths, controlling travel of the work vehicle to avoid the obstacle and move toward a specific point on a main path to be traveled next among the plurality of main paths; and
determining the specific point based on the second information included in the multiple pieces of waypoint information.

15. A computer program product to be executed by a processor in a controller configured to control operation of a work vehicle and to operate in a recording mode and a reproducing mode, the computer program causing the processor to perform:
in the recording mode, generating and recording to a storage device multiple pieces of waypoint information based on position data acquired from a positioning device to detect a position of the work vehicle and sensor data acquired from one or more internal sensors to detect a state of the work vehicle while the work vehicle is traveling along a path including a plurality of main paths that extend parallel or substantially parallel to a plurality of crop rows and a plurality of turning paths that interconnect the plurality of main paths, each of the multiple pieces of waypoint information including first information concerning the position of the work vehicle and second information concerning the state of the work vehicle;
in the reproducing mode, controlling the operation of the work vehicle while causing the work vehicle to perform self-traveling based on the first information and the second information included in the multiple pieces of waypoint information recorded in the recording mode;
in the reproducing mode, when an obstacle is detected by an obstacle sensor mounted on the work vehicle while the work vehicle is traveling along one of the plurality of turning paths, controlling travel of the work vehicle to avoid the obstacle and move toward a specific point on a main path to be traveled next among the plurality of main paths; and
determining the specific point based on the second information included in the multiple pieces of waypoint information.
